(19) Europäisches Patentamt
European Patent Office
Office européen des brevets

(11) **EP 4 546 922 A1**

(12) **EUROPEAN PATENT APPLICATION**
published in accordance with Art. 153(4) EPC

(43) Date of publication:
**30.04.2025 Bulletin 2025/18**

(21) Application number: **23838668.4**

(22) Date of filing: **21.06.2023**

(51) International Patent Classification (IPC):
**H04W 72/12** (2023.01)

(52) Cooperative Patent Classification (CPC):
**H04W 72/12; H04W 72/1268; H04W 72/23**

(86) International application number:
**PCT/CN2023/101965**

(87) International publication number:
**WO 2024/012174 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.07.2022 CN 202210827907**

(71) Applicant: **Huawei Technologies Co., Ltd.
Shenzhen, Guangdong 518129 (CN)**

(72) Inventors:
• **LUO, Zhihu
Shenzhen, Guangdong 518129 (CN)**
• **LU, Zhenwei
Shenzhen, Guangdong 518129 (CN)**
• **WU, Yiling
Shenzhen, Guangdong 518129 (CN)**
• **JIN, Zhe
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND APPARATUS, DEVICE AND STORAGE MEDIUM**

(57)    This application provides a communication method, apparatus, and device, and a storage medium. The method includes: A first device receives first downlink information from a second device, where the first downlink information includes scheduling information indicating uplink transmission of the first device, a transmission parameter and/or a transmission resource of the scheduling information are/is related to second downlink information, and the second downlink information is downlink information before the first downlink information, or the second downlink information is a synchronization signal in the first downlink information. The first device sends uplink information to the first device. This implements flexible scheduling for uplink transmission, and further improves uplink resource utilization efficiency.

400

First device          Second device

S410: Send first downlink information

S420: Send uplink information

FIG. 5

**Description**

This application claims priority to Chinese Patent Application No. 202210827907.X, filed with the China National Intellectual Property Administration on July 14, 2022 and entitled "COMMUNICATION METHOD, APPARATUS, AND DEVICE, AND STORAGE MEDIUM", which is incorporated herein by reference in its entirety.

**TECHNICAL FIELD**

This application relates to the field of communication technologies, and in particular, to a communication method, apparatus, and device, and a storage medium.

**BACKGROUND**

Rapid development of an internet of things (internet of things, IoT) communication technology has gradually realized interconnection of everything. In some communication systems, for example, a 5th generation mobile communication system (5th generation wireless system, 5G), a radio frequency identification (radio frequency identification, RFID) technology is supported, to reduce IoT application costs and power consumption, so that the IoT is more widely applied.

Currently, when the RFID technology is applied to various communication systems, there is a lack of an effective solution for implementing effective transmission control between devices.

**SUMMARY**

Embodiments of this application provide a communication method, apparatus, device, and a storage medium, to provide, when RFID is applied to various communication systems, a solution for implementing effective transmission control between devices.

According to a first aspect, an embodiment of this application provides a communication method. The method includes: A first device receives first downlink information from a second device, where the first downlink information includes scheduling information indicating uplink transmission of the first device, a transmission parameter and/or a transmission resource of the scheduling information is related to second downlink information, and the second downlink information is downlink information before the first downlink information, or the second downlink information is a synchronization signal in the first downlink information. The first device sends uplink information to the first device.

According to the communication method provided in this implementation, before sending the uplink information to the second device, the first device receives the first downlink information sent by the first device, to transmit the uplink information based on the uplink scheduling information in the first downlink information. This implements flexible scheduling for uplink transmission, and further improves uplink resource utilization efficiency.

Further, the transmission parameter and/or the transmission resource of the uplink scheduling information are/is related to the second downlink information, and the first device may receive the uplink scheduling information based on an indication of the second downlink information. This provides a solution for successfully receiving the uplink scheduling information.

In a possible implementation, the transmission resource of the scheduling information includes a time domain resource, the time domain resource is determined based on a first time domain unit, and the first time domain unit is a time domain resource occupied by the synchronization signal in the first downlink information.

According to the communication method provided in this implementation, the time domain resource of the scheduling information is determined based on the time domain resource of the synchronization signal in the first downlink information, and no additional signaling is required to indicate a time domain resource position of the scheduling information, to reduce signaling overheads.

Optionally, a start time domain position of the time domain resource is adjacent to an end time domain position of the first time domain unit, or there is a time domain gap between a start time domain position of the time domain resource and an end time domain position of the first time domain unit.

Optionally, the time domain gap is a preset value, so that signaling overheads and processing complexity are reduced.

Optionally, the time domain gap is related to the second downlink information. When the second downlink information includes the synchronization signal in the first downlink information, the time domain gap is related to at least one of the following of the synchronization signal:

a signal sequence;
a signal length;

a quantity of repetitions; or

a spreading factor.

A flexible indication for a resource position of the scheduling information is improved when signaling overheads are reduced.

Optionally, the time domain resource is between the first time domain unit and a second time domain unit, or the time domain resource is after a second time domain unit, where the second time domain unit is a time domain unit occupied by data of the first downlink information.

Optionally, a start time domain position of the time domain resource is adjacent to an end time domain position of the second time domain unit, or there is a time domain gap between a start time domain position of the time domain resource and an end time domain position of the second time domain unit.

In a possible implementation, the transmission resource of the scheduling information includes a frequency domain resource, the frequency domain resource is determined based on a first frequency domain unit, and the first frequency domain unit is a frequency domain resource occupied by the synchronization signal in the first downlink information.

According to the communication method provided in this implementation, the frequency domain resource occupied by the scheduling information is indicated by the synchronization signal, to reduce signaling overheads.

In a possible implementation, a center frequency of the frequency domain resource is the same as a center frequency of the first frequency domain unit, or there is a frequency domain gap between a center frequency of the frequency domain resource and a center frequency of the first frequency domain unit.

According to the communication method provided in this implementation, the center frequency of the frequency domain resource of the scheduling information is the same as the center frequency of the first frequency domain unit, so that signal interference caused by non-orthogonal subcarriers can be avoided. There is the gap between the center frequency of the frequency domain resource of the scheduling information and the center frequency of the first frequency domain unit, to implement flexible configuration for the frequency domain resource of the scheduling information.

Optionally, the frequency domain gap is a preset value, so that signaling overheads and processing complexity are reduced.

Optionally, the frequency domain gap is related to the second downlink information. When the second downlink information includes the synchronization signal in the first downlink information, the frequency domain gap is related to at least one of the following of the synchronization signal:

the signal sequence;

the signal length;

the quantity of repetitions; or

the spreading factor.

The flexible indication for the resource position of the scheduling information is improved when signaling overheads are reduced.

In a possible implementation, a bandwidth of the frequency domain resource is the same as a bandwidth of the first frequency domain unit.

According to the communication method provided in this implementation, signal interference caused by non-orthogonal subcarriers is avoided, and reliability of a communication system is improved.

Optionally, the bandwidth of the frequency domain resource is a preset value, so that signaling overheads and processing complexity are reduced.

Optionally, the bandwidth of the frequency domain resource is related to the second downlink information. When the second downlink information includes the synchronization signal in the first downlink information, the bandwidth of the frequency domain resource is related to at least one of the following of the synchronization signal:

the signal sequence;

the signal length;

the quantity of repetitions; or

the spreading factor.

The flexible indication for the resource position of the scheduling information is improved when signaling overheads are reduced.

In a possible implementation, when the second downlink information includes the synchronization signal in the first downlink information, the transmission parameter of the scheduling information is related to at least one of the following of the synchronization signal:

the signal sequence;
the signal length;
the quantity of repetitions; or
the spreading factor.

The flexible indication for the resource position of the scheduling information is improved when signaling overheads are reduced.

Optionally, the transmission parameter includes at least one of a bandwidth, a subcarrier spacing, a cyclic prefix CP type, a line code parameter, a channel coding parameter, a modulation scheme, a quantity of repetitions, a spreading factor, a data rate, a time length, a modulation depth, or a duty cycle.

Optionally, channel coding is supported for the uplink information, and the scheduling information includes information indicating a transport block size or a code block size of the uplink information.

In a possible implementation, a channel coding type of the scheduling information is the same as a channel coding type of the uplink information.

According to the communication method provided in this implementation, signaling overheads are reduced, and signal processing complexity is reduced.

In a possible implementation, when a quantity of bits of the scheduling information is greater than or equal to a preset quantity of bits, CRC is used for the scheduling information; or when a quantity of bits of the scheduling information is less than a preset quantity of bits, CRC is not used for the scheduling information.

According to the communication method provided in this implementation, when the quantity of bits of the scheduling information is large, the CRC is used to implement reliable transmission of the scheduling information. When the quantity of bits of the scheduling information is small, the CRC is not used, so that transmission resources are saved and information processing complexity is reduced.

Optionally, the preset quantity of bits is less than or equal to 12.

In a possible implementation, the scheduling information includes first information, and the first information indicates a transmission parameter and/or a transmission resource of the uplink information.

In a possible implementation, a value of the transmission parameter that is of the uplink information and that is indicated by the first information is related to at least one of the following of the synchronization signal:

the signal sequence;
the signal length;
the quantity of repetitions; or
the spreading factor.

Optionally, the transmission parameter of the uplink information includes at least one of a bandwidth, a subcarrier spacing, a CP type, a line code parameter, a channel coding parameter, a modulation scheme, a quantity of repetitions, a spreading factor, a data rate, a time length, a modulation depth, a duty cycle, a quantity of occupied time units, or a redundancy version.

In a possible implementation, the scheduling information includes second information, and the second information indicates at least one of the following:

whether channel coding is enabled for the uplink information;
whether there is a terminator for the uplink information; or
whether a frequency shift is supported for the uplink information.

In a possible implementation, the second information is used to determine at least one indication field in the scheduling information, and the at least one indication field indicates the transmission parameter and/or the transmission resource of the uplink information.

According to a second aspect, an embodiment of this application provides a communication method. The method includes: A second device sends first downlink information to a first device, where the first downlink information includes scheduling information indicating uplink transmission of the first device, a transmission parameter and/or a transmission resource of the scheduling information are/is related to second downlink information, and the second downlink information is downlink information before the first downlink information, or the second downlink information is a synchronization signal in the first downlink information. The second device receives uplink information from the first device.

In a possible implementation, the transmission resource of the scheduling information includes a time domain resource, the time domain resource is determined based on a first time domain unit, and the first time domain unit is a time domain resource occupied by the synchronization signal in the first downlink information.

In a possible implementation, a start time domain position of the time domain resource is adjacent to an end time domain position of the first time domain unit, or there is a time domain gap between a start time domain position of the time domain resource and an end time domain position of the first time domain unit.

In a possible implementation, the time domain gap is a preset value, or the time domain gap is related to the second downlink information. When the second downlink information includes the synchronization signal in the first downlink information, the time domain gap is related to at least one of the following of the synchronization signal:

a signal sequence;
a signal length;
a quantity of repetitions; or
a spreading factor.

In a possible implementation, the time domain resource is between the first time domain unit and a second time domain unit, or the time domain resource is after a second time domain unit, where the second time domain unit is a time domain unit occupied by data of the first downlink information.

In a possible implementation, the time domain resource is adjacent to the second time domain unit, or there is a time domain gap between the time domain resource and the second time domain unit.

In a possible implementation, the transmission resource of the scheduling information includes a frequency domain resource, the frequency domain resource is determined based on a first frequency domain unit, and the first frequency domain unit is a frequency domain resource occupied by the synchronization signal in the first downlink information.

In a possible implementation, a center frequency of the frequency domain resource is the same as a center frequency of the first frequency domain unit, or there is a frequency domain gap between a center frequency of the frequency domain resource and a center frequency of the first frequency domain unit.

In a possible implementation, the frequency domain gap is a preset value, or the frequency domain gap is related to the second downlink information. When the second downlink information includes the synchronization signal in the first downlink information, the frequency domain gap is related to at least one of the following of the synchronization signal:

the signal sequence;
the signal length;
the quantity of repetitions; or
the spreading factor.

In a possible implementation, a bandwidth of the frequency domain resource is the same as a bandwidth of the first frequency domain unit.

In a possible implementation, the bandwidth of the frequency domain resource is a preset value, or the bandwidth of the frequency domain resource is related to the second downlink information. When the second downlink information includes the synchronization signal in the first downlink information, the bandwidth of the frequency domain resource is related to at least one of the following of the synchronization signal:

the signal sequence;
the signal length;
the quantity of repetitions; or
the spreading factor.

In a possible implementation, when the second downlink information includes the synchronization signal in the first downlink information, the transmission parameter of the scheduling information is related to at least one of the following of the synchronization signal:

the signal sequence;
the signal length;
the quantity of repetitions; or
the spreading factor.

In a possible implementation, the transmission parameter includes at least one of a bandwidth, a subcarrier spacing, a cyclic prefix CP type, a line code parameter, a channel coding parameter, a modulation scheme, a quantity of repetitions, a spreading factor, a data rate, a time length, a modulation depth, or a duty cycle.

In a possible implementation, channel coding is supported for the uplink information, and the scheduling information includes information indicating a transport block size or a code block size of the uplink information.

In a possible implementation, a channel coding type of the scheduling information is the same as a channel coding type of the uplink information.

In a possible implementation, when a quantity of bits of the scheduling information is greater than or equal to a preset quantity of bits, the first downlink information further includes a CRC for the scheduling information; or when a quantity of bits of the scheduling information is less than a preset quantity of bits, the first downlink information does not include a CRC corresponding to the scheduling information.

In a possible implementation, the preset quantity of bits is less than or equal to 12.

In a possible implementation, the scheduling information includes first information, and the first information indicates a transmission parameter and/or a transmission resource of the uplink information.

In a possible implementation, a value of the transmission parameter that is of the uplink information and that is indicated by the first information is related to at least one of the following of the synchronization signal:

the signal sequence;
the signal length;
the quantity of repetitions; or
the spreading factor.

In a possible implementation, the transmission parameter of the uplink information includes at least one of a bandwidth, a subcarrier spacing, a CP type, a line code parameter, a channel coding parameter, a modulation scheme, a quantity of repetitions, a spreading factor, a data rate, a time length, a modulation depth, a duty cycle, a quantity of occupied time units, or a redundancy version.

In a possible implementation, the scheduling information includes second information, and the second information indicates at least one of the following:

whether channel coding is enabled for the uplink information;
whether there is a terminator for the uplink information; or
whether a frequency shift is supported for the uplink information.

In a possible implementation, the second information is used to determine at least one indication field in the scheduling information, and the at least one indication field indicates the transmission parameter and/or the transmission resource of the uplink information.

For beneficial effects of the communication method provided in the second aspect and the possible implementations of the second aspect, refer to the beneficial effects brought by the first aspect and the possible implementations of the first aspect. Details are not described herein again.

According to a third aspect, an embodiment of this application provides a communication apparatus. The method includes: a transceiver module, configured to receive first downlink information from a second device, where the first downlink information includes scheduling information indicating uplink transmission of the communication apparatus, a transmission parameter and/or a transmission resource of the scheduling information are/is related to second downlink information, and the second downlink information is downlink information before the first downlink information, or the second downlink information is a synchronization signal in the first downlink information; and a processing module, configured to determine the scheduling information, where the transceiver module is further configured to send uplink information to the first device.

In a possible implementation, the transmission resource of the scheduling information includes a time domain resource, the time domain resource is determined based on a first time domain unit, and the first time domain unit is a time domain resource occupied by the synchronization signal in the first downlink information.

In a possible implementation, a start time domain position of the time domain resource is adjacent to an end time domain position of the first time domain unit, or there is a time domain gap between a start time domain position of the time domain resource and an end time domain position of the first time domain unit.

In a possible implementation, the time domain gap is a preset value, or the time domain gap is related to the second downlink information. When the second downlink information includes the synchronization signal in the first downlink information, the time domain gap is related to at least one of the following of the synchronization signal:

a signal sequence;
a signal length;
a quantity of repetitions; or
a spreading factor.

In a possible implementation, the time domain resource is between the first time domain unit and a second time domain unit, or the time domain resource is after a second time domain unit, where the second time domain unit is a time domain unit occupied by data of the first downlink information.

In a possible implementation, a start time domain position of the time domain resource is adjacent to an end time domain position of the second time domain unit, or there is a time domain gap between a start time domain position of the time domain resource and an end time domain position of the second time domain unit.

In a possible implementation, the transmission resource of the scheduling information includes a frequency domain resource, the frequency domain resource is determined based on a first frequency domain unit, and the first frequency domain unit is a frequency domain resource occupied by the synchronization signal in the first downlink information.

In a possible implementation, a center frequency of the frequency domain resource is the same as a center frequency of the first frequency domain unit, or there is a frequency domain gap between a center frequency of the frequency domain resource and a center frequency of the first frequency domain unit.

In a possible implementation, the frequency domain gap is a preset value, or the frequency domain gap is related to the second downlink information. When the second downlink information includes the synchronization signal in the first downlink information, the frequency domain gap is related to at least one of the following of the synchronization signal:

the signal sequence;
the signal length;
the quantity of repetitions; or
the spreading factor.

In a possible implementation, a bandwidth of the frequency domain resource is the same as a bandwidth of the first frequency domain unit.

In a possible implementation, the bandwidth of the frequency domain resource is a preset value, or the bandwidth of the frequency domain resource is related to the second downlink information. When the second downlink information includes the synchronization signal in the first downlink information, the bandwidth of the frequency domain resource is related to at least one of the following of the synchronization signal:

the signal sequence;
the signal length;
the quantity of repetitions; or
the spreading factor.

In a possible implementation, when the second downlink information includes the synchronization signal in the first downlink information, the transmission parameter of the scheduling information is related to at least one of the following of the synchronization signal:

the signal sequence;
the signal length;
the quantity of repetitions; or
the spreading factor.

In a possible implementation, the transmission parameter includes at least one of a bandwidth, a subcarrier spacing, a cyclic prefix CP type, a line code parameter, a channel coding parameter, a modulation scheme, a quantity of repetitions, a spreading factor, a data rate, a time length, a modulation depth, or a duty cycle.

In a possible implementation, channel coding is supported for the uplink information, and the scheduling information includes information indicating a transport block size or a code block size of the uplink information.

In a possible implementation, a channel coding type of the scheduling information is the same as a channel coding type of the uplink information.

In a possible implementation, when a quantity of bits of the scheduling information is greater than or equal to a preset quantity of bits, CRC is used for the scheduling information; or when a quantity of bits of the scheduling information is less than a preset quantity of bits, CRC is not used for the scheduling information.

In a possible implementation, the preset quantity of bits is less than or equal to 12.

In a possible implementation, the scheduling information includes first information, and the first information indicates a transmission parameter and/or a transmission resource of the uplink information.

In a possible implementation, a value of the transmission parameter that is of the uplink information and that is indicated by the first information is related to at least one of the following of the synchronization signal:

the signal sequence;
the signal length;
the quantity of repetitions; or
the spreading factor.

In a possible implementation, the transmission parameter of the uplink information includes at least one of a bandwidth, a subcarrier spacing, a CP type, a line code parameter, a channel coding parameter, a modulation scheme, a quantity of repetitions, a spreading factor, a data rate, a time length, a modulation depth, a duty cycle, a quantity of occupied time units, or a redundancy version.

In a possible implementation, the scheduling information includes second information, and the second information indicates at least one of the following:

whether channel coding is enabled for the uplink information;
whether there is a terminator for the uplink information; or
whether a frequency shift is supported for the uplink information.

In a possible implementation, the second information is used to determine at least one indication field in the scheduling information, and the at least one indication field indicates the transmission parameter and/or the transmission resource of the uplink information.

For beneficial effects of the communication apparatus provided in the third aspect and the possible implementations of the third aspect, refer to the beneficial effects brought by the first aspect and the possible implementations of the first aspect. Details are not described herein again.

According to a fourth aspect, an embodiment of this application provides a communication apparatus, including: a processing module, configured to determine a transmission parameter and/or a transmission resource of scheduling information indicating uplink transmission of a first device in first downlink information; and a transceiver module, configured to send the first downlink information to the first device, where the first downlink information includes the scheduling information indicating the uplink transmission of the first device, the transmission parameter and/or the transmission resource of the scheduling information are/is related to second downlink information, and the second downlink information is downlink information before the first downlink information, or the second downlink information is a synchronization signal in the first downlink information, where the transceiver module is further configured to receive uplink information from the first device.

In a possible implementation, the transmission resource of the scheduling information includes a time domain resource, the time domain resource is determined based on a first time domain unit, and the first time domain unit is a time domain resource occupied by the synchronization signal in the first downlink information.

In a possible implementation, a start time domain position of the time domain resource is adjacent to an end time domain position of the first time domain unit, or there is a time domain gap between a start time domain position of the time domain resource and an end time domain position of the first time domain unit.

In a possible implementation, the time domain gap is a preset value, or the time domain gap is related to the second downlink information. When the second downlink information includes the synchronization signal in the first downlink information, the time domain gap is related to at least one of the following of the synchronization signal:

a signal sequence;
a signal length;
a quantity of repetitions; or
a spreading factor.

In a possible implementation, the time domain resource is between the first time domain unit and a second time domain unit, or the time domain resource is after a second time domain unit, where the second time domain unit is a time domain unit occupied by data of the first downlink information.

In a possible implementation, a start time domain position of the time domain resource is adjacent to an end time domain position of the second time domain unit, or there is a time domain gap between a start time domain position of the time domain resource and an end time domain position of the second time domain unit.

In a possible implementation, the transmission resource of the scheduling information includes a frequency domain resource, the frequency domain resource is determined based on a first frequency domain unit, and the first frequency domain unit is a frequency domain resource occupied by the synchronization signal in the first downlink information.

In a possible implementation, a center frequency of the frequency domain resource is the same as a center frequency of the first frequency domain unit, or there is a frequency domain gap between a center frequency of the frequency domain resource and a center frequency of the first frequency domain unit.

In a possible implementation, the frequency domain gap is a preset value, or the frequency domain gap is related to the second downlink information. When the second downlink information includes the synchronization signal in the first downlink information, the frequency domain gap is related to at least one of the following of the synchronization signal:

the signal sequence;
the signal length;
the quantity of repetitions; or
the spreading factor.

In a possible implementation, a bandwidth of the frequency domain resource is the same as a bandwidth of the first frequency domain unit.

In a possible implementation, the bandwidth of the frequency domain resource is a preset value, or the bandwidth of the frequency domain resource is related to the second downlink information. When the second downlink information includes the synchronization signal in the first downlink information, the bandwidth of the frequency domain resource is related to at least one of the following of the synchronization signal:

the signal sequence;
the signal length;
the quantity of repetitions; or
the spreading factor.

In a possible implementation, when the second downlink information includes the synchronization signal in the first downlink information, the transmission parameter of the scheduling information is related to at least one of the following of the synchronization signal:

the signal sequence;
the signal length;
the quantity of repetitions; or
the spreading factor.

In a possible implementation, the transmission parameter includes at least one of a bandwidth, a subcarrier spacing, a cyclic prefix CP type, a line code parameter, a channel coding parameter, a modulation scheme, a quantity of repetitions, a spreading factor, a data rate, a time length, a modulation depth, or a duty cycle.

In a possible implementation, channel coding is supported for the uplink information, and the scheduling information includes information indicating a transport block size or a code block size of the uplink information.

In a possible implementation, a channel coding type of the scheduling information is the same as a channel coding type of the uplink information.

In a possible implementation, when a quantity of bits of the scheduling information is greater than or equal to a preset quantity of bits, CRC is used for the scheduling information; or when a quantity of bits of the scheduling information is less than a preset quantity of bits, CRC is not used for the scheduling information.

In a possible implementation, the preset quantity of bits is less than or equal to 12.

In a possible implementation, the scheduling information includes first information, and the first information indicates a transmission parameter and/or a transmission resource of the uplink information.

In a possible implementation, a value of the transmission parameter that is of the uplink information and that is indicated by the first information is related to at least one of the following of the synchronization signal:

the signal sequence;
the signal length;
the quantity of repetitions; or
the spreading factor.

In a possible implementation, the transmission parameter of the uplink information includes at least one of a bandwidth, a subcarrier spacing, a CP type, a line code parameter, a channel coding parameter, a modulation scheme, a quantity of repetitions, a spreading factor, a data rate, a time length, a modulation depth, a duty cycle, a quantity of occupied time units, or a redundancy version.

In a possible implementation, the scheduling information includes second information, and the second information indicates at least one of the following:

whether channel coding is enabled for the uplink information;
whether there is a terminator for the uplink information; or
whether a frequency shift is supported for the uplink information.

In a possible implementation, the second information is used to determine at least one indication field in the scheduling information, and the at least one indication field indicates the transmission parameter and/or the transmission resource of the uplink information.

For beneficial effects of the communication apparatus provided in the fourth aspect, refer to the beneficial effects brought by the second aspect and the possible implementations of the second aspect. Details are not described herein again.

According to a fifth aspect, an embodiment of this application provides a communication device, including a processor and a memory. The memory is configured to store a computer program, and the processor is configured to invoke and run the computer program stored in the memory, to perform the method in any one of the first aspect, the second aspect, or the possible implementations.

According to a sixth aspect, an embodiment of this application provides a chip, including a processor, configured to invoke computer instructions from a memory and run the computer instructions, so that a device in which the chip is installed performs the method in any one of the first aspect, the second aspect, or the possible implementations.

According to a seventh aspect, an embodiment of this application provides a computer-readable storage medium, configured to store computer program instructions, where the computer program enables a computer to perform the method in any one of the first aspect, the second aspect, or the possible implementations.

According to an eighth aspect, an embodiment of this application provides a computer program product, including computer program instructions. The computer program instructions enable a computer to perform the method in any one of the first aspect, the second aspect, or the possible implementations.

## BRIEF DESCRIPTION OF DRAWINGS

FIG. 1 shows a communication system applicable to embodiments of this application;
FIG. 2 is a diagram of a structure of a backscatter communication system according to an embodiment of this application;
FIG. 3a is a diagram of a structure of a radio frequency identification (Radio Frequency Identification, RFID) system according to an embodiment of this application;
FIG. 3b is a diagram of RFID communication according to an embodiment of this application;
FIG. 4 is a diagram of a signal envelope according to an embodiment of this application;
FIG. 5 is a schematic interaction flowchart of a communication method according to an embodiment of this application;
FIG. 6a is a diagram of a time domain resource position of scheduling information for uplink transmission according to an embodiment of this application;
FIG. 6b is another diagram of a time domain resource position of scheduling information for uplink transmission according to an embodiment of this application;
FIG. 7a is another diagram of a time domain resource position of scheduling information for uplink transmission according to an embodiment of this application;
FIG. 7b is another diagram of a time domain resource position of scheduling information for uplink transmission according to an embodiment of this application;
FIG. 7c is another diagram of a time domain resource position of scheduling information for uplink transmission according to an embodiment of this application;
FIG. 7d is another diagram of a time domain resource position of scheduling information for uplink transmission according to an embodiment of this application;
FIG. 7e is another diagram of a time domain resource position of scheduling information for uplink transmission according to an embodiment of this application;
FIG. 8a is a diagram of a frequency domain resource position of scheduling information for uplink transmission according to an embodiment of this application;
FIG. 8b is another diagram of a frequency domain resource position of scheduling information for uplink transmission according to an embodiment of this application;
FIG. 8c is another diagram of a frequency domain resource position of scheduling information for uplink transmission according to an embodiment of this application;
FIG. 9 is a diagram of a coverage level according to an embodiment of this application;
FIG. 10a is a diagram of a basis function of bi-phase space coding according to an embodiment of this application;

FIG. 10b is a diagram of a state transition mechanism of bi-phase space coding according to an embodiment of this application;

FIG. 10c is a diagram of a basis function of Miller code according to an embodiment of this application;

FIG. 10d is a diagram of a state transition mechanism of Miller code according to an embodiment of this application;

FIG. 11 is a block diagram of an apparatus according to an embodiment of this application; and

FIG. 12 is another block diagram of an apparatus according to an embodiment of this application.

## DESCRIPTION OF EMBODIMENTS

The following describes technical solutions of this application with reference to the accompanying drawings.

A communication method provided in this application may be applied to various communication systems, for example, a global system for mobile communications (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an advanced long term evolution (Advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Networks, NTN) system, a universal mobile telecommunications system (Universal Mobile Telecommunications System, UMTS), a wireless local area network (Wireless Local Area Network, WLAN), wireless fidelity (Wireless Fidelity, Wi-Fi), a 5th generation (5th-Generation, 5G) communication system, or another communication system.

In some embodiments, the communication system in embodiments of this application may be applied to a carrier aggregation (Carrier Aggregation, CA) scenario, may be applied to a dual connectivity (Dual Connectivity, DC) scenario, and may be further applied to a standalone (Standalone, SA) networking scenario.

Various embodiments are described with reference to a network device and a terminal device in embodiments of this application. The terminal device may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, a vehicle-mounted device, a wearable device, a terminal device in a next-generation communication system, for example, an NR network, a terminal device in a future evolved public land mobile network (Public Land Mobile Network, PLMN) network, or the like.

In embodiments of this application, the terminal device may be deployed on land, including an indoor device, an outdoor device, a handheld device, a wearable device, or a vehicle-mounted device; may be deployed on water (for example, on a ship); or may be deployed in air (for example, on an airplane, a balloon, and a satellite).

In embodiments of this application, the terminal device may be a mobile phone (Mobile Phone), a tablet computer (Pad), a computer having a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self-driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like.

By way of example and not limitation, in embodiments of this application, the terminal device may alternatively be a wearable device. The wearable device may also be referred to as a wearable intelligent device, and is a generic term for wearable devices developed by intelligently designing daily wearables by using a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data interaction, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device such as a smartphone, for example, various smart bands or smart jewelry for physical sign monitoring.

In embodiments of this application, the network device may be a device configured to communicate with a mobile device. The network device may be an access point (Access Point, AP) in a WLAN, a base transceiver station (Base Transceiver Station, BTS) in GSM or CDMA, a NodeB (NodeB, NB) in WCDMA, an evolved NodeB (Evolved NodeB, eNB or eNodeB) in LTE, a relay station, an access point, a vehicle-mounted device, a wearable device, a network device or a gNB (gNB) in an NR network, a network device in a future evolved PLMN network, a network device in an NTN network, or the like.

By way of example and not limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (High Elliptical Orbit, HEO) satellite. In some embodiments, the network device may alternatively be a base station disposed at a location such as land or water.

In embodiments of this application, the network device may provide a service for a cell, and the terminal device communicates with the network device by using a transmission resource (for example, a frequency domain resource, namely, a spectrum resource) used for the cell. The cell may be a cell corresponding to the network device (for example, a base station). The cell may belong to a macro base station, or may belong to a base station corresponding to a small cell (Small cell). The small cell herein may include: a metro cell (Metro cell), a micro cell (Micro cell), a pico cell (Pico cell), a femto cell (Femto cell), and the like. These small cells have characteristics of small coverage and a low transmit power, and are suitable to provide a high-rate data transmission service.

It should be understood that specific forms of the network device and the terminal device are not limited in this application.

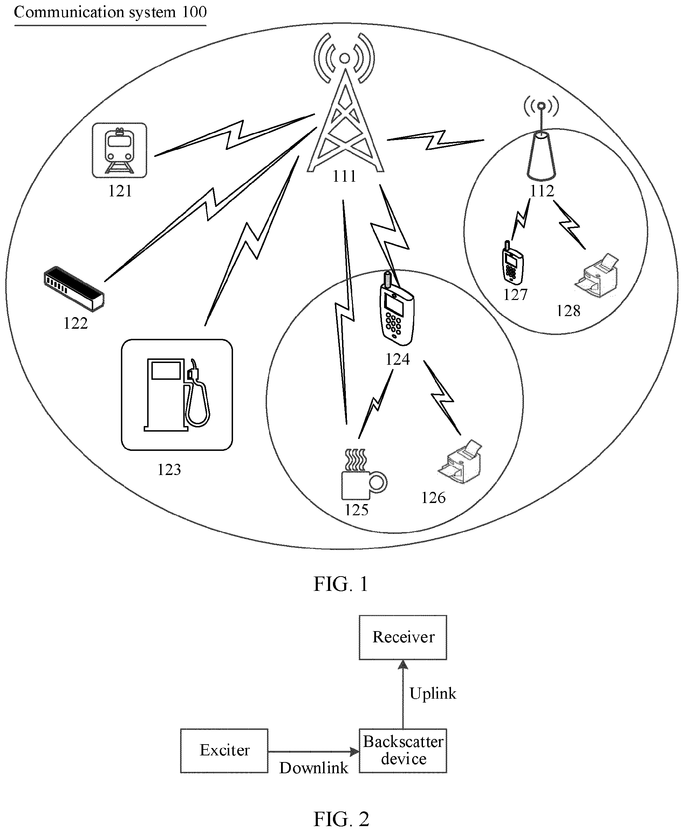

For ease of understanding of embodiments of this application, a communication system applicable to embodiments of this application is first described in detail with reference to FIG. 1. FIG. 1 is a diagram of a communication system applicable to a communication method according to an embodiment of this application. As shown in FIG. 1, a communication system 100 may include a network device and a terminal device. There may be one or more network devices and one or more terminal devices, for example, network devices 111 and 112 and terminal devices 121 to 128 shown in FIG. 1. In the communication system 100, the network device 111 may communicate with one or more of the terminal devices 121 to 126 through a wireless air interface, and the network device 111 may communicate with one or both of the terminal devices 127 and 128 via the network device 112. In addition, the terminal devices 124 to 126 may form a communication system 101. In the communication system 101, the terminal device 124 may communicate with one or both of the terminal devices 125 and 126 through a wireless air interface, and the network device 112 and the terminal devices 127 and 128 may form a communication system 102. In the communication system 102, the network device 112 may communicate with one or both of the terminal devices 127 and 128 through a wireless air interface.

It should be understood that the communication system 101 may be a subsystem of the communication system 100, or a communication system independent of the communication system 100. The communication system 102 may be a subsystem of the communication system 100, or a communication system independent of the communication system 100.

It should be further understood that FIG. 1 is merely an example, and shows two network devices and eight terminal devices in the communication system 100, three terminal devices in the communication system 101, and one network device and two terminal devices in the communication system 102. However, this shall not constitute any limitation on this application. Any one of the foregoing communication systems may include more or fewer network devices, or include more or fewer terminal devices. This is not limited in this embodiment of this application.

In the field of an IoT technology, a battery life of a terminal greatly increases maintenance costs and maintenance difficulty of the terminal, and becomes a main bottleneck that restricts development of the internet of things. Passive backscatter (backscatter) communication based on wireless power transmission, envelope detection demodulation, and backscatter modulation technologies is expected to resolve service life and maintenance problems of the terminal, making it possible for a next-generation terminal to implement the low-cost, high-density, and maintenance-free passive internet of things (Passive IoT).

Backscatter communication may also be referred to as reflection communication. This is not limited in this application.

FIG. 2 is a diagram of a structure of a backscatter communication system according to an embodiment of this application. As shown in FIG. 2, a backscatter communication system 200 usually includes an exciter 210, a receiver 220, a backscatter device (backscatter device) (also referred to as a tag) 230, and a communication link of the backscatter communication system 200 includes a downlink from the exciter 210 to the backscatter device 230 and an uplink from the backscatter device 230 to the receiver 220. An amplitude shift keying (Amplitude Shift Keying, ASK) modulation scheme is usually used for the downlink. The backscatter device 230 may demodulate a downlink modulation signal based on a low-power consumption envelope detector. The backscatter device 230 changes a load of an antenna based on an information bit to be sent, so that the information bit of the backscatter device 230 may be modulated to an incident carrier, to implement wireless transmission of uplink data. Because the backscatter device 230 does not need a high-power consumption device such as a radio frequency oscillator, a power amplifier, or a low noise amplifier, the backscatter device 230 is characterized by low costs and ultra-low power consumption.

In this embodiment of this application, communication may be performed between the exciter 210 and the backscatter device 230, and communication may be performed between the receiver 220 and the backscatter device 230 in the foregoing communication systems. For example, the exciter 210 and the receiver 220 may be deployed on a same device, for example, may be any terminal device or network device in the foregoing example, and the backscatter device 230 may be deployed as any terminal device in the foregoing example. It is assumed that the exciter 210 and the receiver 220 may be deployed in the network device 111 in FIG. 1, and the backscatter device 230 may be the terminal device 125 in FIG. 1. The network device 111 and the terminal device may communicate with each other in the foregoing communication systems, for example, in an NR system. The network device 111 may send downlink signaling/data to the backscatter device 230 via the exciter 210, and receive, via the receiver 220, uplink data sent by the terminal device 125.

The backscatter device 130 may be classified into a passive backscatter device and a semi-passive (semi-passive) backscatter device based on whether the backscatter device 130 is powered by a battery. The passive backscatter device has no power supply, needs to rectify a downlink radio frequency signal, and uses a direct current voltage output through the rectification as a power supply for analog and digital circuits. The semi-passive backscatter device has a power supply, and does not depend on rectification of a downlink radio frequency signal for output to supply power.

The backscatter communication system is an example of applying a backscatter communication technology to various communication systems. The following uses a widely applied ultra-high frequency (Ultra-High Frequency, UHF) RFID system as an example to describe the backscatter communication technology.

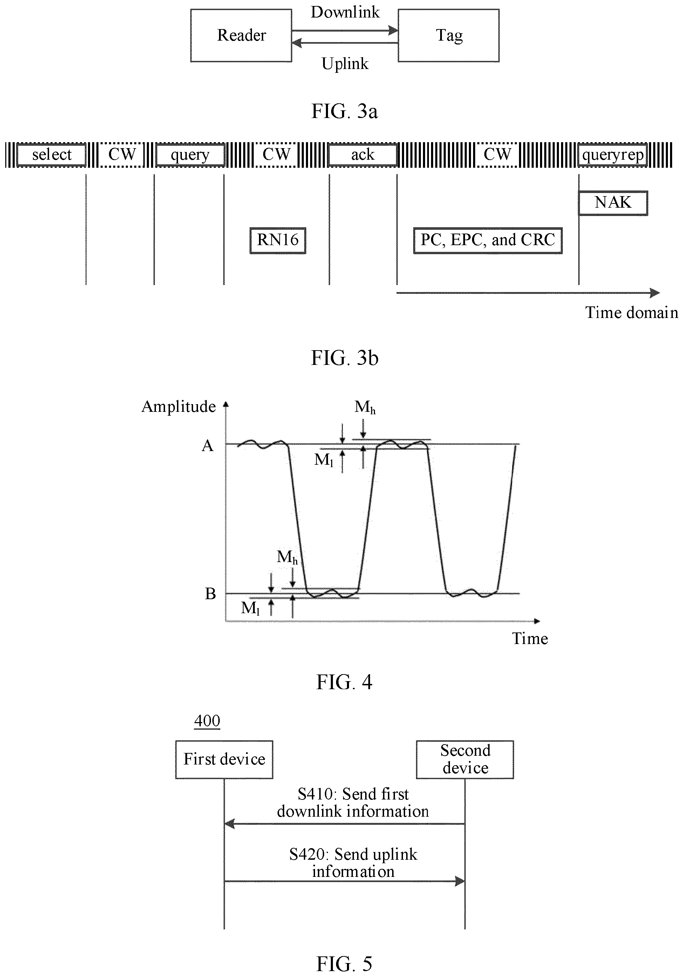

A typical passive UHF RFID system architecture is shown in FIG. 3a. A reader (reader) 310 sends a downlink excitation signal to a tag (tag) 320 on a downlink, to provide energy for the tag 320a. The tag 320 receives signaling sent by the reader 310, and sends an uplink signal to the reader 310 on an uplink by using a backscatter technology. In this manner, the reader 310 may identify an ID of the tag, and perform an reading/writing operation or another operation on the tag.

FIG. 3b is a diagram of RFID communication according to an embodiment of this application. A reader sends a continuous waveform (CW) including a high level to a tag on a downlink. After receiving energy, the tag backscatters information to the reader on an uplink. In the RFID air interface protocol ISO 18000-6C, tag backscatter is defined as using a dynamic slot anti-collision (such as ALOHA) technology for backscatter. A specific communication process between the reader and the tag includes:

(1) a tag selection process, where the reader first sends a select (select) command to select a specific tag/tag group for inventory and access by using the signaling; and
(2) a tag inventory process, where the reader sends a query (query) command to the tag to start one inventory cycle; and after receiving the query command from the reader, the tag to be inventoried selects a random number from a range of (0, $2^Q$ - 1) based on a value Q indicated in the query command, and adds the random number into a slot counter of the tag.

In this case, a tag selecting a random number value of 0 enters a response state, and responds with an RN16. Then, the reader replies with an ACK including the same RN16 to acknowledge the tag. The acknowledged tag is transitioned to an acknowledgment state, and sends a response message, where the response message includes at least one of product code (product code, PC), electronic product code (electronic product code, EPC), or cyclic redundancy check (cyclic redundancy check, CRC) code, to complete a process of inventorying basic information of the tag. A tag selecting a value of non-0 is transitioned to an arbitration state.

The reader may further send queryrep or queryadjust signaling to the tag. When the identified tag receives the queryrep or queryadjust signaling, an inventory flag of the tag is set to an inverse value (for example, A-B or B→A) in this case, the tag is transitioned to a ready state, and this round of inventory process ends.

The queryrep signaling is used to repeat a previous query operation without changing any parameter. Each time the tag in the arbitration state receives a piece of queryrep signaling, a value in a slot counter of the tag is decreased by 1. In this case, the tag whose value is decreased to 0 in the slot counter repeats the same response process as the foregoing. The queryadjust signaling is used to repeat the previous query operation and may increase or decrease Q. In addition, if the tag in the arbitration state receives a piece of queryadjust signaling, the tag adjusts the value Q, then re-selects a random number from the range of (0, $2^0$ - 1), and adds the random number into the slot counter of the tag. In this case, the tag selecting the value of non-0 is transitioned to the arbitration state, and the tag selecting the value of 0 enters the response state.

In the foregoing RFID communication process, the tag transmits the RN16, the basic information (for example, the EPC) of the tag, and the like on the uplink, where transmission control information of the RN16 may be notified by using query signaling, and the transmission control information of the RN16 is still used in subsequent EPC transmission. In this case, resource scheduling for uplink transmission lacks flexible control, which is not conducive to efficient utilization of uplink resources.

When the foregoing RFID is applied to various communication systems (for example, the NR communication system), the exciter 210, the receiver 220, and the backscatter device 230 shown in FIG. 2 may be included. The exciter 210 and the receiver 220 shown in FIG. 2 are similar to the reader 310 in FIG. 3a. In some embodiments, the RFID system in FIG. 3a may also include a receiver configured to receive uplink data sent by the backscatter device 320, and the receiver may be independent of the reader 310. The backscatter device 130 shown in FIG. 2 is similar to the backscatter device 320 in FIG. 3a.

When the foregoing RFID technology is used to communicate with various communication systems (for example, the NR communication system), there is still a technical problem that the foregoing uplink transmission resource scheduling lacks flexible control, which is not conducive to efficient utilization of uplink resources. In this case, this embodiment of this application provides an uplink data control solution. When downlink signaling/data is sent to a backscatter device, scheduling information indicating uplink transmission is sent to the backscatter device, so that the backscatter device performs uplink transmission based on the received scheduling information. Compared with a case of indicating a plurality of pieces of uplink transmission in an inventory process based on one piece of downlink signaling, this improves flexible control on uplink transmission resource scheduling, and further improves uplink resource utilization efficiency.

It may be understood that the foregoing uplink communication method in backscatter communication is merely an example. In some other embodiments of this application, the tag may further drive the chip to transmit information stored in the tag by obtaining energy such as ambient light and heat.

For ease of understanding of embodiments of this application, the following several descriptions are provided.

First, in the following embodiments, first, second, and various numerical numbers are merely used for distinguishing for ease of description, and are not used to limit the scope of embodiments of this application. For example, different devices, downlink information, and time domain units are distinguished.

Second, "predefinition" may be implemented in a manner of pre-storing corresponding code and a table in a device (for example, including a first device and a second device), or in another manner that may indicate related information. A specific implementation is not limited in this application.

"Pre-configuration" may be implemented by pre-storing corresponding code and a table in the device (for example, including the first device and the second device), or in another manner that may indicate related information, or may be implemented by using signaling pre-configuration. For example, the network device has an implementation by using signaling pre-configuration. A specific implementation of pre-configuration is not limited in this application.

Third, the "protocol" in embodiments of this application may be a standard protocol in the communication field, for example, may include an LTE protocol, an NR protocol, and a related protocol applied to a future communication system. This is not limited in this application.

Fourth, in embodiments of this application, descriptions such as "when", "in a case", and "if" mean that a device (for example, the first device or the second device) performs corresponding processing in an objective situation, and are not intended to limit time, and the device (for example, the first device or the second device) is not required to perform a determining action during implementation; and do not mean any other limitation.

With reference to the accompanying drawings, the following describes in detail the communication method provided in embodiments of this application.

It should be understood that, for ease of understanding and description, the following describes in detail the method provided in embodiments of this application by using interaction between the first device and the second device as an example.

The first device may be, for example, the foregoing tag (for example, the backscatter device 220 in FIG. 2) or a terminal device on which the tag is deployed. The second device may be the foregoing reader (for example, the reader 210 in FIG. 2), a terminal device on which the reader is deployed, or a network device on which the reader is deployed. When the first device is the terminal device on which the tag is deployed, and the second device is the terminal device on which the reader is deployed, the first device may be the terminal device 125 or 126 in FIG. 1, and the second device may be the terminal device 124 in FIG. 1. When the first device is the terminal device on which the tag is deployed, and the second device is the network device on which the reader is deployed, the first device may be any one of the terminal devices 121 to 123 in FIG. 1, and the second device may be the network device 111 in FIG. 1; or the first device may be the terminal device 127 or 128 in FIG. 1, and the second device may be the network device 112 in FIG. 1.

However, it should be understood that this should not constitute any limitation on an execution body of the method provided in this application. Provided that a program that records code of the method provided in embodiments of this application can be run according to the method provided in embodiments of this application, any device may serve as an execution body of the method provided in embodiments of this application. For example, the first device shown in the following embodiments may also be replaced with a component in the first device, for example, a chip, a chip system, or another functional module that can invoke a program and execute the program. The second device may also be replaced with a component in the second device, for example, a chip, a chip system, or another functional module that can invoke a program and execute the program.

For ease of understanding of the technical solutions in embodiments of this application, the following explains and describes technical terms in embodiments of this application.

(1) Line encoding, also referred to as line code, is used to eliminate or reduce direct current and low-frequency components in a digital electrical signal for transmission, receiving, and monitoring in a wired/wireless channel.

(2) A modulation depth may be defined as $D=(A-B)/A$, where $A$ represents a maximum value of a signal envelope, and B represents a minimum value of the signal envelope. For example, a diagram of a signal envelope may be shown in FIG. 4.

(3) An envelope ripple represents an amplitude fluctuation (for example, $M_h$ in FIG. 4) of a radio frequency signal envelope at a high level or an amplitude fluctuation (for example, $M_l$ in FIG. 4) of the radio frequency signal envelope at a low level, where $M_h$ represents magnitude of an upward amplitude fluctuation, and $M_l$ represents magnitude of a downward amplitude fluctuation.

FIG. 5 is a schematic interaction flowchart of a communication method 400 according to an embodiment of this application. As shown in FIG. 5, the method 400 may include S410 and S420. The following describes steps in the method 200 in detail.

S410: A second device sends first downlink information to a first device, where the first downlink information includes scheduling information indicating uplink transmission of the first device, a transmission parameter and/or a transmission resource of the scheduling information are/is related to second downlink information, and the second downlink information is downlink information before the first downlink information, or the second downlink information is a synchronization signal in the first downlink information.

Correspondingly, the first device receives the first downlink information sent by the second device.

S420: The first device sends uplink information to the second device based on the scheduling information.

Correspondingly, the second device receives the uplink information from the first device.

For example, the scheduling information indicating the uplink transmission of the first device (uplink scheduling information for short) may indicate uplink transmission of the second device. For example, the uplink scheduling information may indicate a transmission parameter and/or a transmission resource of the uplink information. The transmission parameter may include at least one of a bandwidth, a subcarrier spacing, a cyclic prefix (cyclic prefix, CP) type, a line code parameter, a channel coding parameter, a modulation scheme, a quantity of repetitions, a spreading factor, a data rate, a time length, a modulation depth, or a duty cycle. The transmission resource may include a time domain resource and/or a frequency domain resource occupied by the uplink information. Content of the uplink scheduling information is specifically described below.

It should be noted that in all embodiments of this application, the uplink scheduling information may also be referred to as an uplink grant (UL grant), or the uplink scheduling information may also be referred to as control information of the uplink information. The uplink information may be uplink data and/or uplink control signaling. The uplink scheduling information may be carried on a physical downlink control channel (physical downlink control channel, PDCCH) or a physical downlink shared channel (physical downlink shared channel, PDSCH), and downlink scheduling information may be carried on a PDCCH or a PDSCH. The uplink information may be carried on a physical uplink shared channel (physical uplink shared channel, PUSCH). The uplink data may be application layer data and/or control signaling.

To enable the uplink scheduling information to be transmitted to the first device, even if the first device can correctly receive the uplink scheduling information, the transmission parameter and/or the transmission resource of the uplink scheduling information may be indicated by the second downlink information. For example, the second device may send the second downlink information to the first device to indicate the transmission parameter and/or the transmission resource of the scheduling information.

In a first example, the second downlink information may be independent of the first downlink information. For example, the second device may first send the second downlink information to the first device, and then send the first downlink information to the first device. In this case, the second downlink information may be downlink control information (downlink control information, DCI). For example, the second downlink information may be the query command in FIG. 3b, or downlink signaling including the query command. Optionally, the second downlink information is used as control signaling, and may be one or more of radio resource control (radio resource control, RRC) signaling, a media access control control element (media access control control element, MAC CE), or a media access control protocol data unit (media access control protocol data unit, MAC PDU).

In the first example, the second downlink information may directly indicate the transmission parameter and/or the transmission resource of the scheduling information. The first downlink information may include only the uplink scheduling information, and does not include downlink data, and the transmission resource of the scheduling information is unrelated to a transmission resource of the downlink data. Certainly, the scheduling information and the downlink data belong to different downlink information, and the transmission resources of the scheduling information and the downlink data do not overlap, so that transmission reliability can be improved. Alternatively, the first downlink information may include the uplink scheduling information and downlink data, and transmission resources of the uplink scheduling information and the downlink data may be indicated by the second downlink information, or the second downlink information may indicate a resource gap between the scheduling information and the downlink data.

The downlink data may be carried on a PDSCH or a PDCCH. The downlink data may be application layer data and/or control signaling.

Usually, when the first downlink information includes the downlink data, the first downlink information further includes the synchronization signal. Because a backscatter communication system is usually an asynchronous system, that is, the first device and the second device are not strictly synchronized, the synchronization signal (also referred to as a preamble (preamble), preamble code, or a preamble sequence) needs to be inserted before valid data of downlink information. A function of the synchronization signal may include at least one of automatic gain control (automatic gain control, AGC), time synchronization, frequency synchronization, data packet detection, or boundary detection. The AGC is used to reduce distortion by adjusting a strength of a received signal; the time synchronization is used to obtain correct timing or sampling timing; and the boundary detection is used to detect a boundary of the preamble sequence and/or a boundary of the downlink data. In time domain, the synchronization signal is before the downlink data. In this case, a transmission resource of the synchronization signal may also be indicated by the second downlink information before the first downlink information, or the second downlink information may indicate a resource gap between the synchronization signal and the scheduling information. The resource gap may include a resource gap in time domain and a resource gap in frequency domain.

In a second example, the second downlink information may be included in the first downlink information. For example, the second downlink information may be a synchronization signal in the first downlink information. It should be noted that downlink information (for example, the query in FIG. 3b) sent by the second device to the first device may include a synchronization signal and a data part. When the synchronization signal in the first downlink information indicates the transmission parameter and/or the transmission resource of the scheduling information, the first downlink information may include the synchronization signal, the scheduling information, and the downlink data, and a time domain position of the scheduling information is later than a time domain position of the synchronization signal. Certainly, this application does not exclude a case in which the first downlink information includes the synchronization signal and the scheduling information but does not include the downlink data.

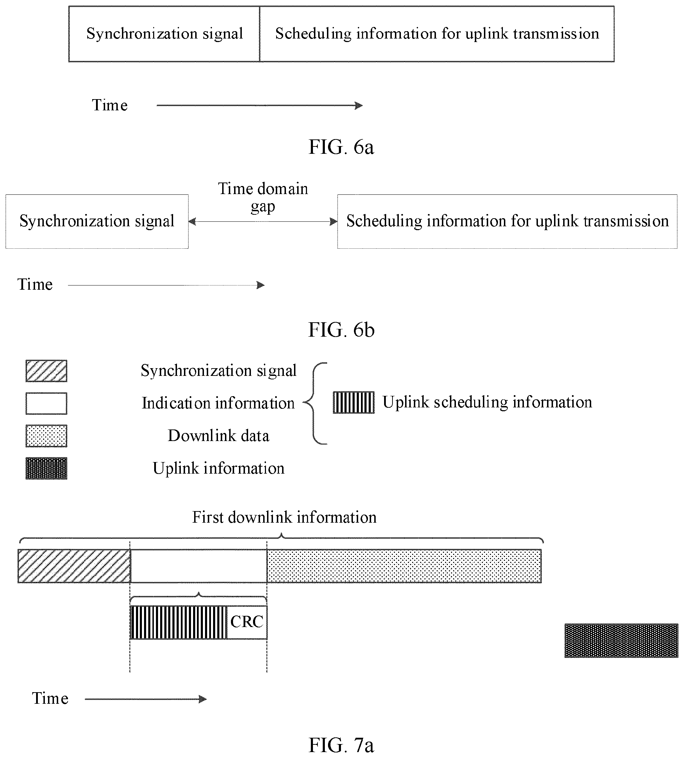

In the second example, a time domain resource of the uplink scheduling information may be determined based on a time domain resource (that is, a first time domain unit) occupied by the synchronization signal. In other words, the first device receives the first downlink information sent by the second device, and then determines the time domain resource of the uplink scheduling information based on the time domain resource of the synchronization signal in the first downlink information. For example, a start time domain position of the time domain resource of the uplink scheduling information may be adjacent to an end time domain position of the synchronization signal (refer to FIG. 6a), or there is a time domain gap (refer to FIG. 6b) between a start time domain position of the time domain resource of the uplink scheduling information and an end time domain position of the synchronization signal. When the time domain gap is zero, it may be understood as that the time domain resource of the uplink scheduling information is adjacent to that of the synchronization signal.

In an implementation, the time domain gap may be a preset value that is pre-configured. For example, the preset value may be configured based on the second downlink information. When sending the second downlink information to the first device, the second device notifies the first device of the preset value by using the second downlink information. In another implementation, the time domain gap may be determined based on the synchronization signal. For example, the time domain gap may be determined based on at least one of a signal sequence, a signal length, a quantity of repetitions, or a spreading factor of the synchronization signal. For example, different signal sequences correspond to different time domain gaps. The first device may determine the time domain gap based on a correspondence between a signal sequence and a time domain gap and a received signal sequence. It should be noted that in this implementation, the time domain gap may be a time interval between the start time domain position of the time domain resource of the uplink scheduling information and the end time domain position of the synchronization signal; or the time domain gap may be a time interval between the start time domain position of the time domain resource of the uplink scheduling information and a start time domain position of the synchronization signal; or the time domain gap may be a time interval between an end time domain position of the time domain resource of the uplink scheduling information and the end time domain position of the synchronization signal.

In the first example, the downlink information before the first downlink information indicates the transmission parameter and/or the transmission resource of the scheduling information, and indicated information is easily accurately received by the first device. In the second example, the synchronization signal indicates the transmission parameter and/or the transmission resource of the scheduling information, and no additional indication information is required, to reduce signaling overheads.

When the time domain resource occupied by the uplink scheduling information is determined based on the synchronization signal, the time domain resource occupied by the scheduling information is after the time domain resource occupied by the synchronization signal. In this case, the time domain resource occupied by the uplink scheduling information includes at least several possible examples shown in FIG. 7a to FIG. 7e. Certainly, the following example does not represent a limitation on the time domain resource occupied by the scheduling information, transmission of the scheduling information on any time domain resource that is determined based on the synchronization signal and that is after the synchronization signal falls within the protection scope of this application.

Example 1: The time domain resource of the uplink scheduling information is between the first time domain unit and a second time domain unit, where the second time domain unit is a time domain unit occupied by data of the first downlink information (that is, the downlink data). With reference to FIG. 7a, a time domain resource of indication information is between the first time domain unit and the second time domain unit.

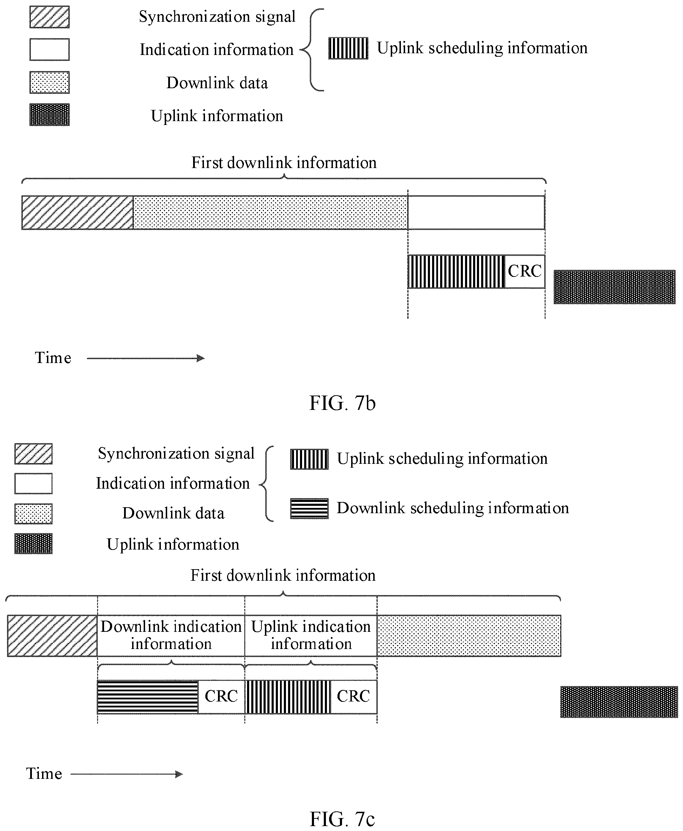

Example 2: The time domain resource of the uplink scheduling information is after a second time domain unit. It should be understood that the second time domain unit is after the first time domain unit. With reference to FIG. 7b, a time domain resource of indication information is after the second time domain unit.

Regardless of whether in the foregoing Example 1 or Example 2, the indication information may include the uplink scheduling information. In some embodiments, the indication information may further include a cyclic redundancy check (cyclic redundancy check, CRC) of the uplink scheduling information, and the CRC is obtained by encoding the uplink scheduling information, and is used to detect or check an error that may occur in data transmission.

In some embodiments, the first downlink information may further include indication downlink scheduling information (downlink scheduling information for short), and the downlink scheduling information indicates downlink transmission. For example, the downlink scheduling information may indicate a transmission parameter and/or a transmission resource of the downlink data, or indicate a transmission parameter and/or a transmission resource of next downlink information. This is not limited in this application. When the first downlink information further includes the downlink scheduling information, for the time domain resource of the uplink scheduling information, refer to the following Example 3 and Example 4.

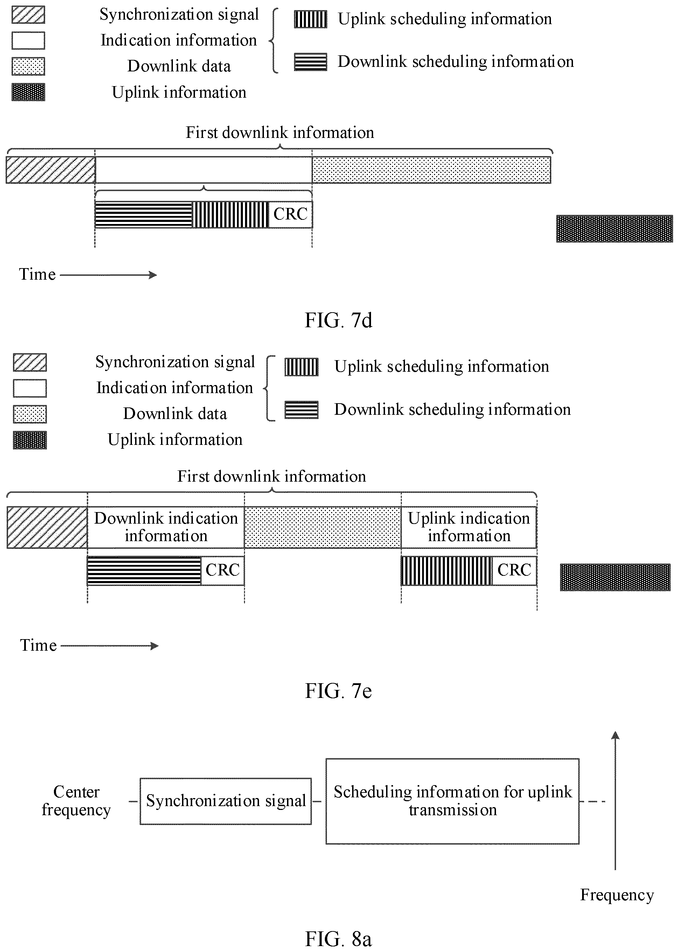

Example 3: The time domain resource of the uplink scheduling information is after a time domain resource of the downlink scheduling information, and is before the second time domain unit. With reference to FIG. 7c and FIG. 7d, indication information is between the first time domain unit and the second time domain unit, and the indication information includes the downlink scheduling information and the uplink scheduling information. A difference lies in that, in FIG. 7c, the indication information includes two pieces of independent indication information: uplink indication information and downlink indication information, where the uplink indication information includes the uplink scheduling information and the CRC obtained by encoding the uplink scheduling information, and the downlink indication information includes the downlink scheduling information and a CRC obtained by encoding the downlink scheduling information; and in FIG. 7d, the indication information includes the uplink scheduling information, the downlink scheduling information, and CRCs obtained by encoding the two pieces of scheduling information in the indication information.

Optionally, a time domain position of the downlink scheduling information may be before a time domain position of the uplink scheduling information, so that transmission scheduling is performed on the downlink data in the first downlink information.

Example 4: The time domain resource of the uplink scheduling information is after the second time domain unit, and a time domain resource of the downlink scheduling information is between the first time domain unit and the second time domain unit. With reference to FIG. 7e, uplink indication information is after the second time domain unit, downlink indication information is between the first time domain unit and the second time domain unit, the uplink indication information may include the uplink scheduling information and the CRC obtained by encoding the uplink scheduling information, and the downlink indication information may include the downlink scheduling information and a CRC obtained by encoding the downlink scheduling information.

It may be understood that, in the foregoing Example 1 to Example 4, the indication information including the uplink scheduling information may be adjacent to or have a time domain gap with the synchronization signal and the downlink data in time domain.

For example, in FIG. 7a, the indication information may be adjacent to or have a time domain gap with the synchronization signal in time domain, and the indication information may be adjacent to or have a time domain gap with the downlink data in time domain. It should be noted that in this implementation, the time domain gap may be a time interval between a start time domain position of a time domain resource of the indication information and the end time domain position of the synchronization signal; or the time domain gap may be a time interval between a start time domain position of a time domain resource of the indication information and the start time domain position of the synchronization signal; or the time domain gap may be a time interval between an end time domain position of a time domain resource of the indication information and the end time domain position of the synchronization signal.

For another example, in FIG. 7c, there is the time domain gap between the uplink indication information and the synchronization signal, and the downlink indication information is carried in the time domain gap. The uplink indication information may be adjacent to or have a time domain gap with the downlink indication information in time domain, and the uplink indication information may be adjacent to or have a time domain gap with the downlink data in time domain. For a time domain gap between any two pieces of information, refer to the descriptions of the time domain gap between the indication information and the synchronization signal in the foregoing example in FIG. 7a. Details are not described herein again.

In some embodiments, whether the CRC is used for the uplink scheduling information may be determined based on a quantity of bits of the scheduling information. For example, when a quantity of bits of the scheduling information is greater than or equal to a preset quantity of bits, the CRC is used for the uplink scheduling information; or when a quantity of bits of the scheduling information is less than a preset quantity of bits, the CRC is not used for the uplink scheduling information. It is assumed that the quantity of bits occupied by the uplink scheduling information is denoted as N1 and a quantity of bits of the CRC used for the uplink scheduling information is denoted as L1. When the CRC is not used for the uplink scheduling information, it may be considered that L1 is 0, and a value of L1 is determined based on N1, so that overheads of the CRC can be flexibly adjusted. When N1 is small, small L1 may be used, so that overheads of the CRC can be reduced, that is, L1/(N1+L1) can be reduced. When N1 is large, large L1 may be used, so that acceptable CRC overheads can be maintained, and CRC check performance can be ensured, because a larger quantity of bits of the CRC indicates a stronger error check capability.

Optionally, the preset quantity of bits may be a positive integer less than or equal to 12. For example, the preset quantity of bits may be 2, 3, 4, 5, 6, 7, 8, 9, 10, 11, 12, or the like.

Regardless of whether the CRC is used for the uplink scheduling information, the CRC may be used for the uplink information. When the CRC is used for the uplink scheduling information, the quantity of check bits of the CRC for the uplink scheduling information may be the same as or different from a quantity of check bits of the CRC for the uplink information. This is not limited in this application.

In some embodiments, the quantity of check bits of the CRC for the uplink scheduling information is 6, and the quantity of check bits of the CRC for the uplink information is 16 or 24.

In some embodiments, the quantity of check bits of the CRC for the uplink scheduling information may be determined based on the quantity of bits of the uplink scheduling information. For example, if the quantity of bits of the uplink scheduling information is less than or equal to K, the quantity of check bits of the CRC for the uplink scheduling information is 6. If the quantity of bits of the uplink scheduling information is greater than K, the quantity of check bits of the CRC for the uplink scheduling information is 16.

For example, assuming that the quantity of check bits of the CRC for the uplink scheduling information is 16, a generator polynomial of the CRC for the uplink scheduling information is $g_{CRC16}(D) = [D^{16} + D^{12} + D^5 + 1]$. When the quantity of check bits of the CRC is 11, a generator polynomial of the CRC is $g_{CRC11}(D) = [D^{11} + D^{10} + D^9 + D^5 + 1]$. When the quantity of check bits of the CRC is 6, a generator polynomial of the CRC is $g_{CRC6}(D) = [D^6 + D^5 + 1]$.

It should be noted that, in this application, not using the CRC may also be understood as not adding the CRC, and using the CRC may also be understood as adding the CRC.

With reference to FIG. 7a to FIG. 7e, a start time domain position at which the first device sends the uplink information is later than an end time domain position of the first downlink information. In other words, a time domain resource occupied by the uplink information does not overlap a time domain resource occupied by the first downlink information. In some embodiments, the time domain resource occupied by the uplink information may overlap the time domain resource occupied by the downlink data of the first downlink information. In other words, the first device may send the uplink information to the second device in a process of receiving the downlink data.

In the second example, a frequency domain resource of the uplink scheduling information may be determined based on a frequency domain resource (that is, a first frequency domain unit) occupied by the synchronization signal in the first downlink information. In other words, the frequency domain resource of the uplink scheduling information is associated with the first frequency domain unit. For example, a center frequency of the frequency domain resource of the uplink scheduling information may be the same as or have a frequency domain gap with a center frequency of the first frequency domain unit, and a bandwidth of the frequency domain resource of the uplink scheduling information may be the same as or different from a bandwidth of the first frequency domain unit.

With reference to FIG. 8a, the center frequency of the frequency domain resource of the uplink scheduling information is the same as the center frequency of the first frequency domain unit, and the bandwidth of the frequency domain resource of the uplink scheduling information is different from the bandwidth of the first frequency domain unit. When the bandwidth of the frequency domain resource of the uplink scheduling information is different from the bandwidth of the first frequency domain unit, the bandwidth of the frequency domain resource of the uplink scheduling information may be a preset value. For example, the bandwidth of the frequency domain resource of the uplink scheduling information may be pre-configured or defined in a protocol. Alternatively, the bandwidth of the frequency domain resource of the uplink scheduling information may be obtained through calculation based on the bandwidth of the first frequency domain unit. For example, the bandwidth of the frequency domain resource of the uplink scheduling information may be a multiple of the bandwidth of the first frequency domain unit, or the bandwidth of the frequency domain resource of the uplink scheduling information is obtained by increasing/subtracting a preset value from the bandwidth of the first frequency domain unit. Alternatively, the bandwidth of the frequency domain resource of the uplink scheduling information is related to the second downlink information, that is, the bandwidth of the frequency domain resource of the uplink scheduling information is indicated by the second downlink information. For example, the second downlink information may be the downlink information before the first downlink information, or the second downlink information is the synchronization signal in the first downlink information. When the second downlink information is the synchronization signal in the first downlink information, the bandwidth of the frequency domain resource of the uplink scheduling information may be related to at least one of the signal sequence, the signal length, the quantity of repetitions, or the spreading factor of the synchronization signal.

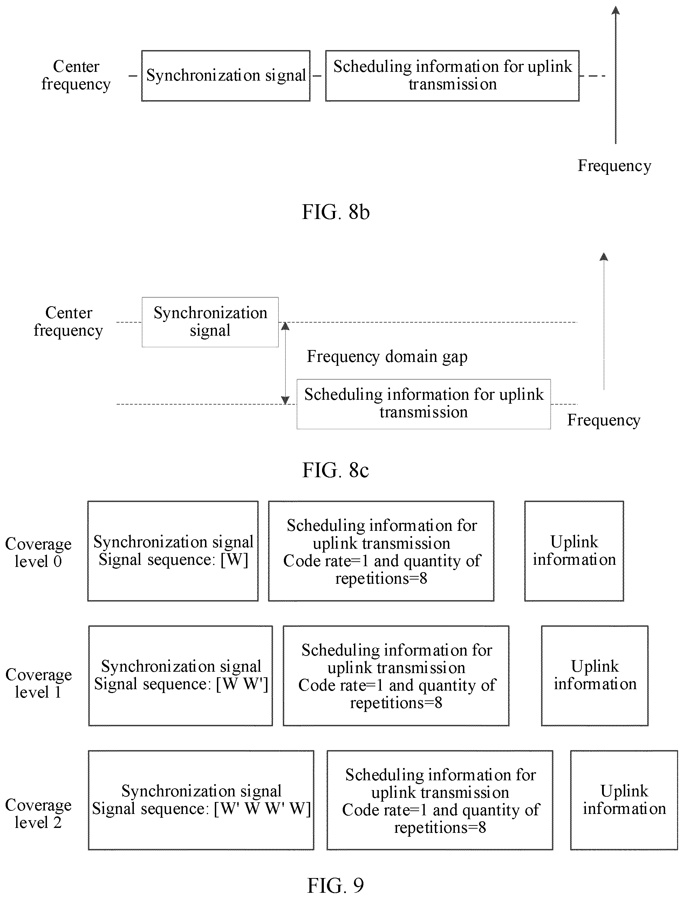

With reference to FIG. 8b, the center frequency of the frequency domain resource of the uplink scheduling information is the same as the center frequency of the first frequency domain unit, and the bandwidth of the frequency domain resource of the uplink scheduling information is the same as the bandwidth of the first frequency domain unit. Usually, when the bandwidth of the frequency domain resource of the uplink scheduling information is the same as the bandwidth of the first frequency domain unit, the bandwidth of the frequency domain resource of the uplink scheduling information does not need to be indicated.

With reference to FIG. 8c, there is the frequency domain gap between the center frequency of the frequency domain resource of the uplink scheduling information and the center frequency of the first frequency domain unit. In this case, the frequency domain gap between the center frequency of the frequency domain resource of the uplink scheduling information and the center frequency of the first frequency domain unit may be a preset value. When the frequency domain gap is the preset value, the frequency domain gap may be pre-configured or defined in a protocol. Alternatively, the frequency domain gap between the center frequency of the frequency domain resource of the uplink scheduling information and the center frequency of the first frequency domain unit may be indicated by the second downlink information. For example, the second downlink information may be the downlink information before the first downlink information, or the second downlink information is the synchronization signal in the first downlink information. When the second downlink information is the synchronization signal in the first downlink information, the frequency domain gap may be related to at least one of the signal sequence, the signal length, the quantity of repetitions, or the spreading factor of the synchronization signal.

In the example shown in FIG. 8c, the bandwidth of the frequency domain resource of the uplink scheduling information may be the same as or different from the bandwidth of the first frequency domain unit. This is not limited in this application. When the bandwidth of the frequency domain resource of the uplink scheduling information is different from the bandwidth of the first frequency domain unit, the bandwidth of the frequency domain resource of the uplink scheduling information may be a preset value, or may be obtained through calculation based on the bandwidth of the first frequency domain unit, or the bandwidth of the frequency domain resource of the uplink scheduling information is related to the second downlink information. For details, refer to related descriptions in the example in FIG. 8a. Details are not described herein again.

In the second example, the transmission parameter of the uplink scheduling information may be determined based on the synchronization signal. For example, the transmission parameter of the uplink scheduling information may be related to at least one of the signal sequence, the signal length, the quantity of repetitions, or the spreading factor of the synchronization signal. In other words, the first device receives the first downlink information sent by the second device, and then determines the transmission parameter of the uplink scheduling information based on at least one of the signal sequence, the signal length, the quantity of repetitions, or the spreading factor of the synchronization signal in the first downlink information.

Optionally, the transmission parameter of the uplink scheduling information may include but is not limited to at least one of a bandwidth, a subcarrier spacing, a CP type, a line code parameter, a channel coding parameter, a modulation scheme, a quantity of repetitions, a spreading factor, a data rate, a time length, a modulation depth, or a duty cycle (duty cycle).

For example, with reference to the following Table 1, the signal sequence of the synchronization signal is a sequence 1, that is, [W], for example, W=[0 1 0 1 1 0]. The transmission parameter of the uplink scheduling information corresponding to the sequence 1 may include: The bandwidth is 1 resource block (resource block, RB), the line code parameter corresponds to Manchester (Manchester) encoding, the channel coding parameter corresponds to polar (polar) code, a code rate of the polar code is 1, the modulation scheme is binary amplitude keying (for example, OOK) modulation, or the quantity of repetitions is 1.

Still refer to Table 1. The signal sequence of the synchronization signal is a sequence 2, that is, [W W']. W' is obtained through preset transformation of W. For example, W' is obtained by negating W element by element, for example, W=[0 1 0 1 1 0] and W'=[1 0 1 0 0 1]. In this case, the sequence 2 is [W W']=[ 1 0 1 0 0 1 1 0 1 0 0 1]. The transmission parameter of the uplink scheduling information corresponding to the sequence 2 may include: The bandwidth is 1 RB, the line code parameter corresponds to Manchester (Manchester) encoding, the channel coding parameter corresponds to polar (polar) code, a code rate of the polar code is 1/4, the modulation scheme is binary amplitude keying (for example, OOK) modulation, or the quantity of repetitions is 8.

Still refer to Table 1. The signal sequence of the synchronization signal is a sequence, 3, that is, [W' W W' W]. W' is obtained through preset transformation of W. For example, W' is obtained by negating W element by element, for example, W=[0 1 0 1 1 0] and W'=[1 0 1 0 0 1]. In this case, the sequence 3 is [W' W W' W]=[1 0 1 0 0 1 0 1 0 1 1 0 1 0 1 0 0 1 0 1 0 1 1 0].

The transmission parameter of the uplink scheduling information corresponding to the sequence 3 may include: The bandwidth is 1 RB, the line code parameter corresponds to Manchester (Manchester) encoding, the channel coding parameter corresponds to polar (polar) code, a code rate of the polar code is 1/4, the modulation scheme is binary amplitude keying (for example, OOK) modulation, or the quantity of repetitions is 64.

**Table 1**

| Index | Signal sequence of a synchronization signal | Transmission parameter of uplink scheduling information |
|---|---|---|
| Sequence 1 | [W] | 1 RB, Manchester encoding, polar encoding, code rate=1, OOK, and quantity of repetitions=1 |
| Sequence 2 | [W' W'] | 1 RB, Manchester encoding, polar encoding, code rate=1/4, OOK, quantity of repetitions=8 |
| Sequence 3 | [W' W W' W] | 1 RB, Manchester encoding, polar encoding, code rate=1/4, OOK, quantity of repetitions=64 |

In the foregoing embodiment, a signal sequence of a synchronization signal may correspond to a group of transmission parameters of uplink scheduling information. It should be noted that a signal sequence of a synchronization signal may further correspond to a plurality of groups of transmission parameters of uplink scheduling information. In this case, after receiving the synchronization signal, the first device may perform blind detection based on an assumption of the plurality of groups of transmission parameters, to receive the uplink scheduling information sent by the first device.

In the foregoing embodiment, the synchronization signal may indicate one or more transmission parameters of the uplink scheduling information by using at least one of the signal sequence, the signal length, the quantity of repetitions, or the spreading factor. In some other embodiments, different coverage levels may be defined for the synchronization signal. At the coverage level, at least one of the signal sequence, the signal length, the quantity of repetitions, or the spreading factor of the synchronization signal may be included. At different coverage levels, at least one of the signal sequence, the signal length, the quantity of repetitions, or the spreading factor of the synchronization signal is different. For example, with reference to FIG. 9, the signal sequence of the synchronization signal is [W], and corresponds to a coverage level 0, where at the coverage level 0, the code rate of the uplink scheduling information is 1, and the quantity of repetitions is 8; the signal sequence of the synchronization signal is [W W'], and corresponds to a coverage level 1, where at the coverage level 1, the code rate of the uplink scheduling information is 1/4, and the quantity of repetitions is 8; and the signal sequence of the synchronization signal is [W' W W' W], and corresponds to a coverage level 2, where at the coverage level 2, the code rate of the uplink scheduling information is 1/4, and the quantity of repetitions is 64. It should be noted that the coverage level is merely a possible naming manner, or may be referred to as a repetition level, a coverage enhancement level, an enhancement coverage level, or the like. This is not limited in this application.

In the foregoing embodiments, an example in which an element of the signal sequence of the synchronization signal is 0 or 1 is used for description. However, this should not be construed as any limitation on this application. The element of the signal sequence may alternatively be +1 or -1, or the element of the signal sequence is a complex number $a+bj$, where $j^2=-1$, and a and b are real numbers.

Based on the foregoing embodiments, the first device may determine the transmission parameter and/or the transmission resource of the uplink scheduling information based on the second downlink information, and then receive, based on the determined transmission parameter and/or the determined transmission resource of the uplink scheduling information, the uplink scheduling information sent by the second device.

It should be understood that when the second downlink information indicates only the transmission parameter, the transmission resource may be pre-configured or defined in a protocol. Similarly, when the second downlink information indicates only the transmission resource, the transmission parameter may be pre-configured or defined in a protocol.

In some embodiments, when channel coding is supported for both the uplink scheduling information sent by the second device and the uplink information sent by the first device, a channel coding type used for the uplink scheduling information may be the same as a channel coding type used for the uplink information. For example, polar (polar) code is used for both the uplink scheduling information and the uplink information.

In an optional implementation, block code (block code) may be used for the uplink scheduling information. A quantity of to-be-encoded bits of the uplink scheduling information may be denoted as K, a to-be-encoded bit sequence of the uplink scheduling information may be denoted as $c_0$, $c_1$, $c_2$, $c_3$, ..., $c_{K-1}$ , and an encoded bit sequence of the uplink scheduling information may be denoted as $d_0$, $d_1$, $d_2$, $d_3$, ..., $d_{N-1}$, where N is a quantity of encoded bits of the uplink scheduling information.

When K = 1, the to-be-encoded bit sequence of the uplink scheduling information is $c_0$, where N = 1, and the encoded bit sequence of the uplink scheduling information is $d_0 = c_0$. Alternatively, the to-be-encoded bit sequence of the uplink scheduling information is $c_0$, and the encoded bit sequence of the uplink scheduling information may be determined based on the following Table 2, where N = $Q_m$, and $Q_m$ is a modulation order of the uplink scheduling information.

**Table 2**

| $Q_m$ | Encoded bits $d_0$, $d_1$, $d_2$, $d_3$, ..., $d_{N-1}$ |
|---|---|
| 1 | $[c_0]$ |
| 2 | $[c_0\ y]$ |
| 4 | $[c_0\ y\ x\ x]$ |
| 6 | $[c_0\ y\ x\ x\ x\ x]$ |
| 8 | $[c_0\ y\ x\ x\ x\ x\ x\ x]$ |

In the foregoing Table 2, "x" and "y" are placeholders (placeholders), and a main function is to maximize a Euclidean distance of a modulation symbol that carries an information bit.

When K = 2, the to-be-encoded bit sequence of the uplink scheduling information is $c_0$, $c_1$, where N = 3, and the encoded bit sequence of the uplink scheduling information is $d_0 = c_0$, $d_1 = c_1$, and $d_2 = c_2$, where $c_2 = (c_0 + c_1)$ mod2. Alternatively, the to-be-encoded bit sequence of the uplink scheduling information is $c_0$, $c_1$, and the encoded bit sequence of the uplink scheduling information may be determined based on the following Table 3, where N = $3Q_m$, and $Q_m$ is a modulation order of the uplink scheduling information.

**Table 3**

| $Q_m$ | Encoded bits $d_0$, $d_1$, $d_2$, $d_3$, ..., $d_{N-1}$ |
|---|---|
| 1 | $[c_0\ c_1\ c_2]$ |
| 2 | $[c_0\ c_1\ c_2\ c_0\ c_1\ c_2]$ |
| 4 | $[c_0\ c_1\ X\ X\ c_2\ c_0\ x\ x\ c_1\ c_2\ x\ x]$ |
| 6 | $[c_0\ c_1\ X\ X\ X\ x\ c_2\ c_0\ x\ x\ x\ x\ c_1\ c_2\ x\ x\ x\ x]$ |
| 8 | $[c_0\ c_1\ x\ x\ x\ x\ x\ x\ c_2\ c_0\ x\ x\ x\ x\ x\ x\ c_1\ c_2\ x\ x\ x\ x\ x\ x]$ |

In the foregoing Table 3, "x" is a placeholder (placeholders), and a main function is to maximize a Euclidean distance of a modulation symbol that carries an information bit.

When $3 \le K \le 11$, the encoded bit sequence of the uplink scheduling information satisfies:

$$d_i = \left(\sum_{k=0}^{K-1} c_k \cdot M_{i,k}\right) \bmod 2$$

, where i = 0,1,···, N - 1, N = 32, $M_{i,k}$ represents a basic sequence, and $M_{i,k}$ is determined based on the following Table 4.

**Table 4**

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 0 | 1 | 1 | 0 | 0 | 0 | 0 | 0 | 0 | 0 | 0 | 1 |
| 1 | 1 | 1 | 1 | 0 | 0 | 0 | 0 | 0 | 0 | 1 | 1 |
| 2 | 1 | 0 | 0 | 1 | 0 | 0 | 1 | 0 | 1 | 1 | 1 |
| 3 | 1 | 0 | 1 | 1 | 0 | 0 | 0 | 0 | 1 | 0 | 1 |
| 4 | 1 | 1 | 1 | 1 | 0 | 0 | 0 | 1 | 0 | 0 | 1 |
| 5 | 1 | 1 | 0 | 0 | 1 | 0 | 1 | 1 | 1 | 0 | 1 |
| 6 | 1 | 0 | 1 | 0 | 1 | 0 | 1 | 0 | 1 | 1 | 1 |
| 7 | 1 | 0 | 0 | 1 | 1 | 0 | 0 | 1 | 1 | 0 | 1 |
| 8 | 1 | 1 | 0 | 1 | 1 | 0 | 0 | 1 | 0 | 1 | 1 |
| 9 | 1 | 0 | 1 | 1 | 1 | 0 | 1 | 0 | 0 | 1 | 1 |

(continued)

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 10 | 1 | 0 | 1 | 0 | 0 | 1 | 1 | 1 | 0 | 1 | 1 |
| 11 | 1 | 1 | 1 | 0 | 0 | 1 | 1 | 0 | 1 | 0 | 1 |
| 12 | 1 | 0 | 0 | 1 | 0 | 1 | 0 | 1 | 1 | 1 | 1 |
| 13 | 1 | 1 | 0 | 1 | 0 | 1 | 0 | 1 | 0 | 1 | 1 |
| 14 | 1 | 0 | 0 | 0 | 1 | 1 | 0 | 1 | 0 | 0 | 1 |
| 15 | 1 | 1 | 0 | 0 | 1 | 1 | 1 | 1 | 0 | 1 | 1 |
| 16 | 1 | 1 | 1 | 0 | 1 | 1 | 1 | 0 | 0 | 1 | 0 |
| 17 | 1 | 0 | 0 | 1 | 1 | 1 | 0 | 0 | 1 | 0 | 0 |
| 18 | 1 | 1 | 0 | 1 | 1 | 1 | 1 | 1 | 0 | 0 | 0 |
| 19 | 1 | 0 | 0 | 0 | 0 | 1 | 1 | 0 | 0 | 0 | 0 |
| 20 | 1 | 0 | 1 | 0 | 0 | 0 | 1 | 0 | 0 | 0 | 1 |
| 21 | 1 | 1 | 0 | 1 | 0 | 0 | 0 | 0 | 0 | 1 | 1 |
| 22 | 1 | 0 | 0 | 0 | 1 | 0 | 0 | 1 | 1 | 0 | 1 |
| 23 | 1 | 1 | 1 | 0 | 1 | 0 | 0 | 0 | 1 | 1 | 1 |
| 24 | 1 | 1 | 1 | 1 | 1 | 0 | 1 | 1 | 1 | 1 | 0 |
| 25 | 1 | 1 | 0 | 0 | 0 | 1 | 1 | 1 | 0 | 0 | 1 |
| 26 | 1 | 0 | 1 | 1 | 0 | 1 | 0 | 0 | 1 | 1 | 0 |
| 27 | 1 | 1 | 1 | 1 | 0 | 1 | 0 | 1 | 1 | 1 | 0 |
| 28 | 1 | 0 | 1 | 0 | 1 | 1 | 1 | 0 | 1 | 0 | 0 |
| 29 | 1 | 0 | 1 | 1 | 1 | 1 | 1 | 1 | 1 | 0 | 0 |
| 30 | 1 | 1 | 1 | 1 | 1 | 1 | 1 | 1 | 1 | 1 | 1 |
| 31 | 1 | 0 | 0 | 0 | 0 | 0 | 0 | 0 | 0 | 0 | 0 |

In some embodiments, when channel coding is supported for the uplink information sent by the first device, the uplink scheduling information may carry a transport block size or a code block size used to transmit the uplink information.

In the foregoing embodiments, determining of the transmission parameter and the transmission resource of the uplink scheduling information is described by using an example. After the first device receives the uplink scheduling information based on the transmission parameter and the transmission resource of the uplink scheduling information, in S420, the first device transmits the uplink information based on the received scheduling information. The following describes content of the uplink scheduling information by using an example.

Example 1: The uplink scheduling information includes first information, and the first information indicates a transmission parameter and/or a transmission resource used by the first device to transmit the uplink information.

For example, the transmission parameter that is of the uplink information and that may be indicated by the first information includes but is not limited to at least one of a bandwidth, a frequency domain resource position, a time resource position, a subcarrier spacing, a CP type, a line code parameter, a channel coding parameter, a modulation scheme, a quantity of repetitions, a spreading factor, a data rate, a time length, a modulation depth, a duty cycle (duty cycle), a quantity of occupied time units, or a redundancy version.

For example, a value or a value range of the transmission parameter that is of the uplink information and that is indicated by the first information may be related to at least one of the signal sequence, the signal length, the quantity of repetitions, or the spreading factor of the synchronization signal. In other words, the first device may determine the value, the value range, or a value set of the transmission parameter of the uplink information based on at least one of the signal sequence, the signal length, the quantity of repetitions, or the spreading factor of the synchronization signal. The transmission parameter that is of the uplink information and that is indicated by the first information is a coverage-related parameter.

For example, the transmission parameter that is of the uplink information and that is indicated by the first information is the quantity of repetitions. It is assumed that the synchronization signal has three coverage levels: a coverage level 0, a coverage level 1, and a coverage level 2. A value set of the quantity of repetitions is determined based on the coverage level of the synchronization signal. For example, the coverage level of the synchronization signal is the coverage level 0, and the value set of the quantity of repetitions indicated in the uplink scheduling information is {1, 2, 4, 8}. The coverage level of the synchronization signal is the coverage level 1, and the value set of the quantity of repetitions indicated in the uplink scheduling information is {4, 8, 16, 32}. The coverage level of the synchronization signal is the coverage level 2, and the value set of the quantity of repetitions indicated in the uplink scheduling information is {16, 32, 64, 128}. In this case, the quantity of repetitions may be indicated from the value set by using 2 bits. If the value set of the quantity of repetitions is based on a solution of {1, 2, 4, 8, 16, 32, 64, 128} regardless of a coverage level of the synchronization signal, 3 bits are required for the uplink scheduling information to indicate the quantity of repetitions. In this embodiment, signaling overheads for the uplink scheduling information to indicate the quantity of repetitions can be reduced.

For example, the first information may indicate a frequency domain resource of the uplink information. The first information may be used to directly notify the frequency domain resource of the uplink information. For example, the first information includes at least one of a bandwidth of the uplink information, a rate of the uplink information, or an offset (offset) between the frequency domain resource of the uplink information and the frequency domain resource of the uplink scheduling information. Alternatively, the first information may be used to indirectly notify the frequency domain resource of the uplink information. For example, different frequency domain resource positions of the uplink information are determined by using different line code parameter configurations, where the line code parameter may include at least one of a line type and an M value. The line code type may be Manchester, bi-phase space coding (bi-phase space coding, FM0), or Miller (Miller) code. The M value is used to determine a waveform length per bit.

Manchester encoding is also referred to as phase encoding, where encoding of each data bit is either low first and then high, or high first and then low, and lasts for same time, which is a self-clocking signal without a direct current component. The following Table 5 and Table 6 are examples of Manchester encoding.

**Table 5**

| Input bit | Encoded bits |
|-----------|--------------|
| 0 | 1010 |
| 1 | 0101 |

**Table 6**

| Input bit | Encoded bits |
|-----------|--------------|
| 0 | 10 |
| 1 | 01 |

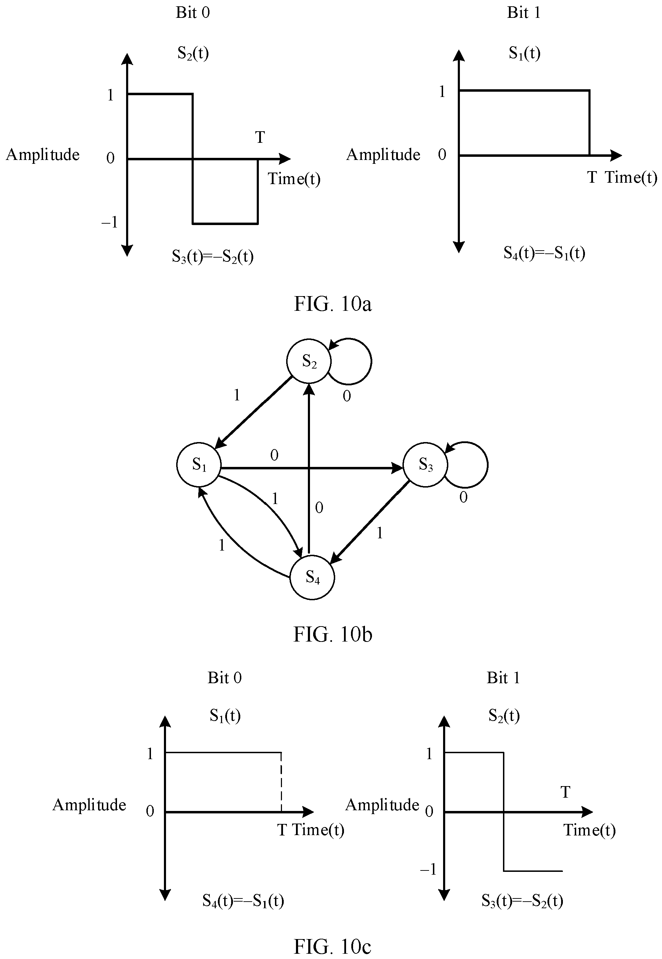

FM0 coding may also be referred to as bi-phase space coding. A working principle is that logic is represented by a level change in a bit window. If a level is reversed from a start of the bit window, it indicates logic "1". If a level is reversed in a middle of the bit window in addition to the start of the bit window, it indicates logic "0". With reference to the RFID air interface protocol ISO 18000-6C protocol, the following is an example of FM0 coding. Basis functions corresponding to a bit 0 and a bit 1 are shown in FIG. 10a, and the bit 0 and the bit 1 respectively correspond to two different basis functions. For example, the bit 0 corresponds to $s_2$ and $s_3$, and the bit 1 corresponds to $s_1$ and $s_4$. A state transition mechanism is shown in FIG. 10b. To be specific, a basis function that needs to be used for a next bit may be uniquely determined based on a basis function corresponding to a current bit and the next bit. For example, it is assumed that the current bit is 0, and a corresponding waveform is $s_2$. When the next bit is 0, the waveform $s_2$ still needs to be used. When the next bit is 1, a waveform $s_1$ needs to be used. The basis function herein is a waveform after encoding.

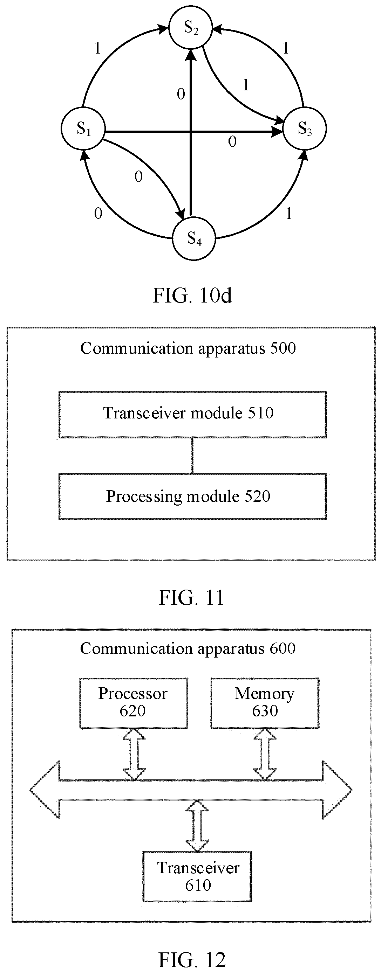

The Miller code (Miller code) is also referred to as delay modulation code, and is deformed bi-phase code. An encoding rule of the Miller code is as follows: A symbol start of an original symbol "1" does not transition, and a center point transitions for indication, that is, 10 or 01 is used for indication. When information code is consecutive "1"s, subsequent "1"s are encoded in an interleaving manner. "0" in the information code is encoded as bipolar non-return-to-zero code "00" or "11", that is, a symbol middle does not transition. When information code is single "0", a start, a middle moment, and an end do not transition. When information code is consecutive "0"s, a gap between two symbols "0" transitions. With reference to the RFID air interface protocol ISO 18000-6C protocol, the following is an example of Miller encoding. Possible basis functions corresponding to a bit 0 and a bit 1 are shown in FIG. 10c, and the bit 0 and the bit 1 respectively correspond to two different basis functions. For example, the bit 0 corresponds to $s_1$ and $s_4$, and the bit 1 corresponds to $s_2$ and $s_3$. A state transition mechanism is shown in FIG. 10d. For example, it is assumed that a current bit is 0, and a corresponding basis

function is $s_1$. When a next bit is 0, a basis function $s_4$ needs to be used. When a next bit is 1, a basis function $s_2$ needs to be used.

For example, the first information may indicate a modulation scheme of the uplink information. Optionally, the modulation scheme includes amplitude shift keying (amplitude shift keying, ASK) modulation (also referred to as amplitude keying) and phase-shift keying (phase-shift keying, PSK). ASK may be a single sideband (single sideband, SSB)-ASK, a double-sideband (double-sideband, DSB)-ASK, or a phase reversal (phase reversal, PR)-ASK.

For example, the first information may indicate a time domain resource of the uplink information. The first information may be used to directly notify the time domain resource of the uplink information. For example, the first information indicates a time domain resource start position and/or a time domain resource end position of the uplink information.

Example 2: The uplink scheduling information includes first information, and the first information indicates at least one of the following:

    whether channel coding is enabled for the uplink information;
    whether there is a terminator for the uplink information; or
    whether a frequency shift is supported for the uplink information.

In Example 2, the second information may indicate at least one indication field (also referred to as an indicator field) of the uplink scheduling information. It should be noted that different indication fields have different functions, that is, content indicated by the second information is different. In this case, indication fields included in the uplink scheduling information should be different. The indication field in the uplink scheduling information indicates the transmission parameter and/or the transmission resource of the uplink information.

For example, with reference to Table 7, when the uplink scheduling information indicates that channel coding is enabled for the uplink information (for example, Value=1), the uplink scheduling information includes a field used to determine a modulation and coding scheme (modulation and coding scheme, MCS) or a channel coding parameter; or when the second information indicates that channel coding is not enabled for the uplink data (for example, Value=0), the uplink scheduling information includes a field used to determine a quantity of repetitions. In the uplink scheduling information, a bit occupied by the field used to determine the MCS or the channel coding parameter may be the same as a bit occupied by the field used to determine the quantity of repetitions.

**Table 7**

| Field | Content of uplink scheduling information | |
|---|---|---|
| 1 | Value=1 indicates that channel coding is enabled for uplink data | Value=0 indicates that channel coding is not enabled for uplink data |
| 2 | MCS | Quantity of repetitions |

For another example, with reference to Table 8, when the second information indicates that there is no terminator for the uplink information (for example, Value= 1), the uplink scheduling information includes a field indicating a transport block size or a code block size; or when the second information indicates that there is a terminator for the uplink information (for example, Value=0), the uplink scheduling information includes a field indicating an MCS or a quantity of repetitions. The terminator is used to determine an end position of uplink data transmission.

**Table 8**

| Field | Content of uplink scheduling information | |
|---|---|---|
| 1 | Value=1 indicates that there is no terminator for uplink data | Value=0 indicates that there is a terminator for uplink data |
| 2 | Transport block size | MCS |

For still another example, with reference to Table 9, when the second information indicates that a frequency shift is enabled for the uplink information (for example, Value=1), the uplink scheduling information includes a field indicating a frequency domain resource; or when the second information indicates that a frequency shift is not enabled for the uplink data (for example, Value=0), the uplink scheduling information includes a field indicating an MCS or a quantity of repetitions.

**Table 9**

| Field | Content of uplink scheduling information | |
|---|---|---|
| 1 | Value=1 indicates that a frequency shift is enabled for uplink data | Value=0 indicates that a frequency shift is not enabled for uplink data |
| 2 | Frequency domain resource indication information | MCS |

Therefore, in this embodiment of this application, before sending the uplink information to the second device, the first device receives the first downlink information sent by the first device, to transmit the uplink information based on the uplink scheduling information in the first downlink information. This implements flexible scheduling for uplink transmission, and further improves uplink resource utilization efficiency.

Further, the transmission parameter and/or the transmission resource of the uplink scheduling information are/is related to the second downlink information, and the first device may receive the uplink scheduling information based on an indication of the second downlink information. This provides a solution for successfully receiving the uplink scheduling information.

For all embodiments of this application, in a possible implementation, a modulation scheme of at least one of the first downlink information, the second downlink information, the uplink scheduling information, or the downlink scheduling information may be on-off keying (on-off keying, OOK), multicarrier on-off keying (multicarrier on-off keying, MC-OOK), double-sideband amplitude shift keying (double-sideband amplitude shift keying, DSB-ASK), single-sideband amplitude shift keying (single-sideband amplitude shift keying, SSB-ASK), phase-reversal amplitude shift keying (phase-reversal amplitude shift keying, PR-ASK), multiple amplitude shift keying (multiple amplitude shift keying, MASK), frequency shift keying (frequency shift keying, FSK), Gaussian frequency shift keying (gaussian frequency shift keying, GFSK), multiple frequency shift keying (multiple frequency shift keying, MFSK), binary phase shift keying (binary phase shift keying, BPSK), quadrature phase shift keying (quadrature phase shift keying, QPSK), pulse amplitude modulation (pulse amplitude modulation, PAM), pulse-width modulation (pulse-width modulation, PWM), pulse position modulation (pulse position modulation, PPM), pulse density modulation (pulse density modulation, PDM), or pulse-code modulation (Pulse-code modulation, PCM).

For all embodiments of this application, in a possible implementation, the first device may determine, by using the synchronization signal, whether there is a downlink control channel after the synchronization signal, where the downlink control channel may carry the uplink scheduling information. Alternatively, the first device obtains first configuration information from the second device, where the first configuration information indicates whether there is a downlink control channel after the synchronization signal, and the downlink control channel may carry the uplink scheduling information.

For all embodiments of this application, in a possible implementation, the first device may send capability information to the second device. Correspondingly, the second device may receive the capability information from the first device. The capability information includes at least one of the following: whether the first device supports the downlink control channel, whether the first device supports channel coding, a channel coding type supported by the first device, whether the first device supports line code, a line code type supported by the first device, or whether the first device supports hybrid automatic repeat request acknowledgment (hybrid automatic repeat request acknowledgment, HARQ-ACK) feedback. Whether the first device supports channel coding may be specifically whether the first device supports channel coding for an uplink. The channel coding type supported by the first device may be specifically a channel coding type supported by the first device for the uplink. Whether the first device supports the line code may be specifically whether the first device supports the line code for the uplink. The line code type supported by the first device may be specifically a line code type supported by the first device for the uplink. Whether the first device supports the HARQ-ACK feedback may be specifically whether the first device supports the HARQ-ACK feedback for the uplink. The uplink may be an uplink control channel and/or an uplink data channel. It should be noted that in the foregoing capability information, a plurality of pieces of capability information may be associated. For the plurality of pieces of associated capability information, the first device needs to report only one piece of capability information in the plurality of pieces of associated capability information. In this manner, overheads of reporting the capability information by the first device can be reduced. For example, whether the first device supports channel coding and whether the first device supports the downlink control channel may be associated. For example, if the first device reports capability information, and content of the capability information is that the first device supports channel coding, it indicates that the first device also supports the downlink control channel. If the first device reports capability information, and content of the capability information is that the first device does not support channel coding, it indicates that the first device does not support the downlink control channel either. For another example, whether the first device supports the HARQ-ACK feedback and whether the first device supports the control channel may be associated. For example, if the first device reports capability information, and content of the capability information is that the first device supports the HARQ-ACK feedback, it indicates that the first device also supports the downlink control channel. If the first device reports capability information, and content of the capability information is that the first device does not support the HARQ-ACK feedback, it indicates that the first device does not support the downlink control channel either.

For all embodiments of this application, in a possible implementation, the first device may send capability information to the second device. Correspondingly, the second device may receive the capability information from the first device. The capability information includes at least one of the following: the first device supports the downlink control channel, the first device supports channel coding, the channel coding type supported by the first device, the line code supported by the first device, the line code type supported by the first device, or the first device supports the HARQ-ACK feedback. That the first device supports channel coding may be specifically that the first device supports channel coding for the uplink. The channel coding type supported by the first device may be specifically a channel coding type supported by the first device for the uplink. That the first device supports the line code may be specifically that the first device supports the line code for the uplink. The line code type supported by the first device may be specifically a line code type supported by the first device for the uplink. That the first device supports the HARQ-ACK feedback may be specifically that the first device supports the HARQ-ACK feedback for the uplink. The uplink may be the uplink control channel and/or the uplink data channel. If the first device does not send the capability information to the second device, and the capability information is that the first device supports the downlink control channel, or if the second device does not receive the capability information from the first device, and the capability information is that the first device supports the downlink control channel, it indicates that the first device does not support the downlink control channel. If the first device does not send the capability information to the second device, and the capability information is that the first device supports channel coding, or if the second device does not receive the capability information from the first device, and the capability information is that the first device supports channel coding, it indicates that the first device does not support channel coding. If the first device does not send the capability information to the second device, and the capability information is that the first device supports the line code, or if the second device does not receive the capability information from the first device, and the capability information is that the first device supports the line code, it indicates that the first device does not support the line code. If the first device does not send the capability information to the second device, and the capability information is that the first device supports the HARQ-ACK feedback, or if the second device does not receive the capability information from the first device, and the capability information is that the first device supports the HARQ-ACK feedback, it indicates that the first device does not support the HARQ-ACK feedback. It should be noted that, in the foregoing capability information, a plurality of pieces of capability information may be associated. For the plurality of pieces of associated capability information, the first device needs to report only one piece of capability information in the plurality of pieces of associated capability information. In this manner, overheads of reporting the capability information by the first device can be reduced. For example, that the first device supports channel coding and that the first device supports the downlink control channel may be associated. For example, if the first device reports capability information, and content of the capability information is that the first device supports channel coding, it indicates that the first device also supports the downlink control channel. For another example, that the first device supports the HARQ-ACK feedback and that the first device supports the control channel may be associated. For example, if the first device reports capability information, and content of the capability information is that the first device supports the HARQ-ACK feedback, it indicates that the first device also supports the downlink control channel.

For all embodiments of this application, in a possible implementation, the second device may send second configuration information to the first device. Correspondingly, the first device may receive the second configuration information from the second device. The second configuration information includes at least one of the following configuration information: whether to enable the downlink control channel (enable), whether to enable channel coding, an enabled channel coding type, whether to enable the line code, an enabled line code type, or whether to enable the HARQ-ACK feedback. It should be understood that "enable (enable)" herein may also be expressed as "activate (activate)". Whether to enable channel coding may be specifically whether the second device enables channel coding for the uplink. The enabled channel coding type may be specifically a channel coding type enabled by the second device for the uplink. Whether to enable the line code may be specifically whether the second device enables the line code for the uplink. The enabled line code type may be specifically a line code type enabled by the second device for the uplink. Whether to enable the HARQ-ACK feedback may be specifically whether the second device enables the HARQ-ACK feedback for the uplink. The uplink may be the uplink control channel and/or the uplink data channel. It should be noted that the foregoing plurality of pieces of configuration information may be associated. For the plurality of pieces of associated configuration information, the second device needs to send only one piece of configuration information in the plurality of pieces of associated configuration information. In this manner, overheads of sending the second configuration information by the second device can be reduced. For example, whether to enable channel coding and whether to enable the downlink control channel may be associated. For example, if the second device sends second configuration information, and content included in the second configuration information is that channel coding is enabled, it indicates that the second device also enables the downlink control channel. If the second device sends second configuration information, and content of the second configuration information is that channel coding is not enabled, it indicates that the second device does not enable the downlink control channel either. For another example, whether the second device enables the HARQ-ACK feedback and whether the second device enables the control channel may be associated. For example, if the second device sends second configuration information, and content of the second configuration information is that the HARQ-ACK feedback is enabled, it indicates that the second device also enables the downlink control channel. If the second device sends second configuration information, and content of the second configuration information is that the HARQ-ACK feedback is not enabled, it indicates that the second device does not enable the downlink control channel either.

For all embodiments of this application, in a possible implementation, the second device may send second configuration information to the first device. Correspondingly, the first device may receive the second configuration information from the second device. The second configuration information includes at least one of the following: enable (enable) the downlink control channel, enable channel coding, an enabled channel coding type, enable the line code, an enabled line code type, or enable the HARQ-ACK feedback. It should be understood that "enable (enable)" herein may also be expressed as "activate (activate)". Enabling channel coding may be specifically that the second device enables channel coding for the uplink. The enabled channel coding type may be specifically a channel coding type enabled by the second device for the uplink. Enabling the line code may be specifically that the second device enables the line code for the uplink. The enabled line code type may be specifically a line code type enabled by the second device for the uplink. Enabling the HARQ-ACK feedback may be specifically that the second device enables the HARQ-ACK feedback for the uplink. The uplink may be the uplink control channel and/or the uplink data channel. If the second device does not send the second configuration information to the first device, and the second configuration information is to enable the downlink control channel, or if the first device does not receive the second configuration information from the second device, and the second configuration information is to enable the downlink control channel, it indicates that the second device does not enable the downlink control channel. If the second device does not send the second configuration information to the first device, and the second configuration information is to enable channel coding, or if the first device does not receive the second configuration information from the second device, and the second configuration information is to enable channel coding, it indicates that the second device does not enable channel coding. If the second device does not send the second configuration information to the first device, and the second configuration information is to enable the line code, or if the first device does not receive the second configuration information from the second device, and the second configuration information is to enable the line code, it indicates that the second device does not enable the line code. If the second device does not send the second configuration information to the first device, and the second configuration information is to enable the HARQ-ACK feedback, or if the first device does not receive the second configuration information from the second device, and the second configuration information is to enable the HARQ-ACK feedback, it indicates that the second device does not enable the HARQ-ACK feedback. It should be noted that the foregoing plurality of pieces of configuration information may be associated. For the plurality of pieces of associated configuration information, the second device needs to send only one piece of configuration information in the plurality of pieces of associated configuration information. In this manner, overheads of sending the second configuration information by the second device can be reduced. For example, enabling channel coding and enabling the downlink control channel may be associated. For example, if the second device sends second configuration information, and content included in the second configuration information is to enable channel coding, it indicates that the second device also enables the downlink control channel. For another example, that the second device enables the HARQ-ACK feedback and that the second device enables the control channel may be associated. For example, if the second device sends second configuration information, and content of the second configuration information is that the HARQ-ACK feedback is enabled, it indicates that the second device also enables the downlink control channel.

For all embodiments of this application, in a possible implementation, the first device sends capability information to the second device. Correspondingly, the second device receives the capability information from the first device. In other words, the first device may report the capability information to the second device.

Optionally, the capability information may include one or more of the following: whether the first device supports energy harvesting, whether the first device supports a low-power consumption receiver, or whether the first device supports backscatter communication.

It should be understood that, that the first device supports energy harvesting may mean that the first device supports autonomously obtaining energy from an environment. A source of the energy may be at least one of the following: light, a radio wave (radio waves), a temperature difference (temperature differences), a vibration (vibrations), motion (motion), a salinity gradient (salinity gradients), or a wind or water flow (water flows). The first device converts the energy obtained from the environment into electric energy. An advantage of energy harvesting is that a battery is replaced to supply power to a device or battery energy is supplemented, to prolong a service life of the device. Energy generated in an energy harvesting manner may be provided for a signal processing circuit or a data storage circuit of the first device, to maintain a normal working state of the first device.

It should be understood that, that the first device supports a low-power consumption receiver may mean that the first device supports receiving a signal in a non-coherent receiving manner. The low-power consumption receiver may avoid using a radio frequency module with high power consumption, for example, a frequency mixer with high linearity, a voltage-controlled oscillator that can provide a precise local oscillator signal, and the like. Therefore, the low-power consumption receiver may achieve a low power consumption level. The non-coherent receiving manner may be envelope detection, differential demodulation, or the like. The signal may be a signal from the second device. That the first device supports a low-power consumption receiver may mean that the first device has only a low-power consumption receiver, or the first device has both a low-power consumption receiver and a conventional receiver. The conventional receiver is different from the low-power consumption receiver. The conventional receiver may have a superheterodyne, zero intermediate frequency, or low intermediate frequency receiver architecture, and the conventional receiver may support coherent receiving. Some high-performance and high-precision module circuits need to be used for the conventional receiver to ensure receiving performance of the receiver, for example, a low noise amplifier with a high gain and high linearity, a frequency mixer with high linearity, and a voltage-controlled oscillator that can provide a precise local oscillator signal. These module circuits have high power consumption. Therefore, within a period of time, power consumption of the conventional receiver is higher than power consumption of the low-power consumption receiver. For the first device having both the conventional receiver and the low-power consumption receiver, an energy saving effect may be achieved by turning off the conventional receiver and turning on the low-power consumption receiver. The first device may receive a wake-up signal through the low-power consumption receiver, and trigger, by using the wake-up signal, enabling of the conventional receiver. The wake-up signal may be sent by the second device.

The envelope detection may be a signal detection method in which an envelope or an amplitude line of a low-frequency original signal is obtained after half-wave or full-wave rectification is performed on a high-frequency or intermediate-frequency input signal. In this way, after receiving the signal in a manner including detection, the first device may obtain the envelope of the original signal. Further, the first device may perform digital sampling on the envelope of the original signal, compare the envelope with an amplitude or energy threshold set by the first device, and determine whether the received signal is 1 or 0. Certainly, the first device may alternatively determine, in another implementation, whether the received signal is 1 or 0. This is not specifically limited in embodiments of this application.

It should be understood that, that the first device supports backscatter communication may mean that the first device may support transferring information to the second device when there is no active transmitting radio frequency chain; or the first device supports transferring information to the second device when the first device has an active transmitting radio frequency chain but does not need to enable the active transmitting radio frequency chain. In other words, in this case, the first device mainly depends on an excitation device other than the second device or continuous carriers transmitted by the second device to perform modulation. For example, the first device may backscatter a part or all of incident carriers by adjusting impedance of an antenna of the first device; or the first device may not backscatter an incident carrier or absorb energy of an incident carrier by adjusting impedance of an antenna of the first device. In this way, the first device may modulate digital information of the first device to the incident carrier by adjusting the impedance of the antenna of the first device, and transfer the digital information to the second device.

Optionally, for all embodiments of this application, a maximum bandwidth supported by the first device is limited.

Optionally, in a possible implementation, a maximum uplink bandwidth supported by the first device does not exceed X1.

For example, X1 is 20 MHz, X1 is 5 MHz, X1 is 3 MHz, X1 is 1.4 MHz, X1 is 1 MHz, X1 is 720 kHz, X1 is 540 kHz, X1 is 360 kHz, or X1 is 180 kHz.

Alternatively, optionally, X1 is K1 resource blocks, and K1 is a positive integer.

For example, K1 is a positive integer less than or equal to 11, K1 is a positive integer less than or equal to 25, K1 is a positive integer less than or equal to 51, or K1 is a positive integer less than or equal to 106.

Optionally, for all embodiments of this application, in another possible implementation, a maximum downlink bandwidth supported by the first device does not exceed Y1.

For example, Y1 is 20 MHz, Y1 is 5 MHz, Y1 is 3 MHz, Y1 is 1.4 MHz, Y1 is 1 MHz, Y1 is 720 kHz, Y1 is 540 kHz, Y1 is 360 kHz, or Y1 is 180 kHz.

Alternatively, optionally, Y1 is K2 resource blocks, and K2 is a positive integer.

For example, K2 is a positive integer less than or equal to 11, K2 is a positive integer less than or equal to 25, K2 is a positive integer less than or equal to 51, or K2 is a positive integer less than or equal to 106.

Optionally, in embodiments of this application, the maximum uplink bandwidth supported by the first device is less than or equal to the maximum downlink bandwidth supported by the first device.

Optionally, for all embodiments of this application, a quantity of transmit antennas and/or a quantity of receive antennas supported by the first device are/is limited.

Optionally, the quantity of receive antennas of the first device does not exceed X2. X2 is 1, 2, or 4.

Alternatively, optionally, a quantity of receive branches (Rx branch) of the first device does not exceed X2. X2 is 1, 2, or 4.

Optionally, the quantity of transmit antennas of the first device does not exceed Y2. Y2 is 1, 2, or 4.

Alternatively, optionally, a quantity of transmit branches of the first device does not exceed Y2. Y2 is 1, 2, or 4.

Optionally, the quantity of transmit antennas of the first device is greater than or equal to the quantity of receive antennas of the second device.

Alternatively, optionally, the quantity of transmit branches of the first device is greater than or equal to the quantity of receive branches of the first device.

It should be noted that, in embodiments of this application, the "receive branch" may also be referred to as a "quantity of receive radio frequency channels" or a "quantity of receive radio frequency chains (RF chain)". The "transmit branch" may also be referred to as a "quantity of transmit radio frequency channels" or a "quantity of transmit radio frequency chains".

It should be noted that the first device cannot simultaneously perform uplink sending and downlink receiving in a serving cell having a paired spectrum (paired spectrum).

FIG. 11 is a block diagram of an apparatus according to an embodiment of this application. As shown in FIG. 11, the apparatus 500 may include a transceiver module 510 and a processing module 520.

Optionally, the communication apparatus 500 may correspond to the first device in the foregoing method embodiments, for example, may be the first device or a component (for example, a chip or a chip system) configured in the first device.

It should be understood that the modules in the communication apparatus 500 are respectively intended to implement corresponding procedures of the methods in the foregoing embodiments.

The transceiver module 510 may be configured to receive first downlink information from a second device, where the first downlink information includes scheduling information indicating uplink transmission of the communication apparatus, a transmission parameter and/or a transmission resource of the scheduling information are/is related to second downlink information, and the second downlink information is downlink information before the first downlink information, or the second downlink information is a synchronization signal in the first downlink information. The processing module 520 may be configured to determine the scheduling information. The transceiver module 510 is further configured to send uplink information to the first device.

It should be understood that a specific process in which the units perform the foregoing corresponding steps is described in detail in the foregoing method embodiments. For brevity, details are not described herein.

Optionally, the communication apparatus 500 may correspond to the second device in the foregoing method embodiments, for example, may be the second device or a component (for example, a chip or a chip system) configured in the second device.

It should be understood that the modules in the communication apparatus 500 are respectively intended to implement corresponding procedures of the methods in the foregoing embodiments.

When the communication apparatus 500 is configured to perform the method 400 in FIG. 5, the processing module 520 may be configured to determine a transmission parameter and/or a transmission resource of scheduling information indicating uplink transmission of a first device in first downlink information. The transceiver module 510 is configured to send the first downlink information to the first device, where the first downlink information includes the scheduling information indicating the uplink transmission of the first device, the transmission parameter and/or the transmission resource of the scheduling information are/is related to second downlink information, and the second downlink information is downlink information before the first downlink information, or the second downlink information is a synchronization signal in the first downlink information. The transceiver module 510 is further configured to receive uplink information from the first device.

It should be understood that a specific process in which the units perform the foregoing corresponding steps is described in detail in the foregoing method embodiments. For brevity, details are not described herein.

When the apparatus 500 is the first device or the second device, the transceiver module 510 in the apparatus 500 may be implemented as a transceiver, for example, may correspond to a transceiver 610 in an apparatus 600 shown in FIG. 12; and the processing module 520 in the apparatus 500 may be implemented as at least one processor, for example, may correspond to a processor 620 in the apparatus 600 shown in FIG. 12.

When the apparatus 500 is a chip or a chip system configured in a communication device (for example, the first device or the second device), the transceiver module 510 in the apparatus 500 may be implemented as an input/output interface, a circuit, or the like, and the processing module 520 in the apparatus 500 may be implemented as a processor, a microprocessor, an integrated circuit, or the like integrated into the chip or the chip system.

FIG. 12 is another block diagram of an apparatus according to an embodiment of this application. As shown in FIG. 12, the apparatus 600 includes a transceiver 610, a processor 620, and a memory 630. The transceiver 610, the processor 620, and the memory 630 communicate with each other through an internal connection path, the memory 630 is configured to store instructions, and the processor 620 is configured to execute the instructions stored in the memory 630, to control the transceiver 610 to send a signal and/or receive a signal.

It should be understood that the apparatus 600 may correspond to the first device or the second device in the foregoing method embodiments, and may be configured to perform each step and/or procedure performed by the first device or the second device in the foregoing method embodiments. Optionally, the memory 630 may include a read-only memory and a random access memory, and provide the instructions and data for the processor. A part of the memory may further include a non-volatile random access memory. The memory 630 may be an independent device, or may be integrated into the processor 620. The processor 620 may be configured to execute the instructions stored in the memory 630. When the processor 620 executes the instructions stored in the memory, the processor 620 is configured to perform each step and/or procedure corresponding to the first device or the second device in the method embodiments.

Optionally, the apparatus 600 is the first device in the foregoing embodiments.

Optionally, the apparatus 600 is the second device in the foregoing embodiments.

The transceiver 610 may include a transmitter and a receiver. The transceiver 610 may further include an antenna. There may be one or more antennas. The processor 620, the memory 630, and the transceiver 610 may be components integrated into different chips. For example, the processor 620 and the memory 630 may be integrated into a baseband chip, and the transceiver 610 may be integrated into a radio frequency chip. Alternatively, the processor 620, the memory 630, and the transceiver 610 may be components integrated into a same chip. This is not limited in this application.

Optionally, the apparatus 600 is a component configured in the first device, for example, a chip or a chip system.

Optionally, the apparatus 600 is a component configured in the second device, for example, a chip or a chip system.

Alternatively, the transceiver 620 may be a communication interface, for example, an input/output interface or a circuit. The transceiver 620, the processor 610, and the memory 630 may be integrated into the same chip, for example, integrated into the baseband chip.

This application further provides a processing apparatus, including at least one processor. The at least one processor is configured to execute a computer program stored in a memory, so that the processing apparatus performs the method performed by the first device or the second device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first device or the second device in the foregoing method embodiments.

An embodiment of this application further provides a processing apparatus, including a processor and a memory. The memory is configured to store a computer program. The processor is configured to invoke the computer program from the memory and run the computer program, so that the processing apparatus performs the method performed by the first device or the second device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods may be implemented by a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

According to the method provided in embodiments of this application, this application further provides a computer program product. The computer program product includes computer program code. When the computer program code is run on a computer, the computer is enabled to perform the method performed by the first device or the second device in the foregoing method embodiments.

According to the method provided in embodiments of this application, this application further provides a computer-readable storage medium. The computer-readable storage medium stores program code. When the program code is run on a computer, the computer is enabled to perform the method performed by the first device or the second device in the foregoing method embodiments.

According to the method provided in embodiments of this application, this application further provides a communication system. The communication system may include the first device and the second device described above.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may perform communication by using a local process and/or a remote process and based on, for example, a signal having one or more data packets (for example, data from two components interacting with another component in a local system, a distributed system, and/or across a network such as the internet interacting with another system by using the signal).

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one place, or may be distributed on a plurality of network modules. Some or all the modules may be selected based on actual needs to achieve the objectives of the solutions of embodiments.

In addition, functional modules in embodiments of this application may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

    receiving, by a first device, first downlink information from a second device, wherein the first downlink information comprises scheduling information indicating uplink transmission of the first device, a transmission parameter and/or a transmission resource of the scheduling information are/is related to second downlink information, and the second downlink information is downlink information before the first downlink information, or the second downlink information is a synchronization signal in the first downlink information; and
    sending, by the first device, uplink information to the first device.

2. The method according to claim 1, wherein the transmission resource of the scheduling information comprises a time domain resource, the time domain resource is determined based on a first time domain unit, and the first time domain unit is a time domain resource occupied by the synchronization signal in the first downlink information.

3. The method according to claim 2, wherein a start time domain position of the time domain resource is adjacent to an end time domain position of the first time domain unit, or there is a time domain gap between a start time domain position of the time domain resource and an end time domain position of the first time domain unit.

4. The method according to claim 3, wherein

    the time domain gap is a preset value; or
    the time domain gap is related to the second downlink information, wherein
    when the second downlink information comprises the synchronization signal in the first downlink information, the time domain gap is related to at least one of the following of the synchronization signal:

        a signal sequence;
        a signal length;
        a quantity of repetitions; or
        a spreading factor.

5. The method according to any one of claims 1 to 4, wherein

    when a quantity of bits of the scheduling information is greater than or equal to a preset quantity of bits, a cyclic redundancy check CRC is used for the scheduling information; or
    when a quantity of bits of the scheduling information is less than a preset quantity of bits, CRC is not used for the scheduling information.

6. The method according to claim 5, wherein the preset quantity of bits is less than or equal to 12.

7. The method according to any one of claims 1 to 6, wherein the scheduling information comprises first information, and the first information indicates a transmission parameter and/or a transmission resource of the uplink information.

8. The method according to claim 7, wherein a value of the transmission parameter that is of the uplink information and that is indicated by the first information is related to at least one of the following of the synchronization signal:

    the signal sequence;

the signal length;
the quantity of repetitions; or
the spreading factor.

9. The method according to claim 7 or 8, wherein the transmission parameter of the uplink information comprises at least one of a bandwidth, a subcarrier spacing, a CP type, a line code parameter, a channel coding parameter, a modulation scheme, a quantity of repetitions, a spreading factor, a data rate, a time length, a modulation depth, a duty cycle, a quantity of occupied time units, or a redundancy version.

10. The method according to any one of claims 1 to 9, wherein the scheduling information comprises second information, and the second information indicates at least one of the following:

whether channel coding is enabled for the uplink information;
whether there is a terminator for the uplink information; or
whether a frequency shift is supported for the uplink information.

11. The method according to any one of claims 1 to 10, wherein the second information is used to determine at least one indication field in the scheduling information, and the at least one indication field indicates the transmission parameter and/or the transmission resource of the uplink information.

12. A communication method, wherein the method comprises:

sending, by a second device, first downlink information to a first device, wherein the first downlink information comprises scheduling information indicating uplink transmission of the first device, a transmission parameter and/or a transmission resource of the scheduling information are/is related to second downlink information, and the second downlink information is downlink information before the first downlink information, or the second downlink information is a synchronization signal in the first downlink information; and
receiving, by the second device, uplink information from the first device.

13. The method according to claim 12, wherein the transmission resource of the scheduling information comprises a time domain resource, the time domain resource is determined based on a first time domain unit, and the first time domain unit is a time domain resource occupied by the synchronization signal in the first downlink information.

14. The method according to claim 13, wherein a start time domain position of the time domain resource is adjacent to an end time domain position of the first time domain unit, or there is a time domain gap between a start time domain position of the time domain resource and an end time domain position of the first time domain unit.

15. The method according to claim 14, wherein

the time domain gap is a preset value; or
the time domain gap is related to the second downlink information, wherein
when the second downlink information comprises the synchronization signal in the first downlink information, the time domain gap is related to at least one of the following of the synchronization signal:

a signal sequence;
a signal length;
a quantity of repetitions; or
a spreading factor.

16. The method according to any one of claims 12 to 15, wherein

when a quantity of bits of the scheduling information is greater than or equal to a preset quantity of bits, the first downlink information further comprises a CRC for the scheduling information; or
when a quantity of bits of the scheduling information is less than a preset quantity of bits, the first downlink information does not comprise a CRC corresponding to the scheduling information.

17. The method according to claim 16, wherein the preset quantity of bits is less than or equal to 12.

18. The method according to any one of claims 12 to 17, wherein the scheduling information comprises first information, and the first information indicates a transmission parameter and/or a transmission resource of the uplink information.

19. The method according to claim 18, wherein a value of the transmission parameter that is of the uplink information and that is indicated by the first information is related to at least one of the following of the synchronization signal:

    the signal sequence;
    the signal length;
    the quantity of repetitions; or
    the spreading factor.

20. The method according to claim 18 or 19, wherein the transmission parameter of the uplink information comprises at least one of a bandwidth, a subcarrier spacing, a CP type, a line code parameter, a channel coding parameter, a modulation scheme, a quantity of repetitions, a spreading factor, a data rate, a time length, a modulation depth, a duty cycle, a quantity of occupied time units, or a redundancy version.

21. The method according to any one of claims 12 to 20, wherein the scheduling information comprises second information, and the second information indicates at least one of the following:

    whether channel coding is enabled for the uplink information;
    whether there is a terminator for the uplink information; or
    whether a frequency shift is supported for the uplink information.

22. The method according to any one of claims 12 to 21, wherein the second information is used to determine at least one indication field in the scheduling information, and the at least one indication field indicates the transmission parameter and/or the transmission resource of the uplink information.

23. A communication apparatus, comprising a module configured to perform the method according to any one of claims 1 to 11 or comprising a module configured to perform the method according to any one of claims 12 to 22.

24. A communication device, comprising a processor and a memory, wherein the memory is configured to store a computer program, and the processor is configured to invoke and run the computer program stored in the memory, to perform the method according to any one of claims 1 to 22.

25. A chip, comprising a processor, configured to invoke computer instructions from a memory and run the computer instructions, so that a device in which the chip is installed performs the method according to any one of claims 1 to 22.

26. A computer-readable storage medium, configured to store computer program instructions, wherein the computer program enables a computer to perform the method according to any one of claims 1 to 22.

27. A computer program product, comprising computer program instructions, wherein the computer program instructions enable a computer to perform the method according to any one of claims 1 to 22.

Communication system 100

FIG. 1

FIG. 2

FIG. 3a

FIG. 3b

FIG. 4

400

FIG. 5

| Synchronization signal | Scheduling information for uplink transmission |
|---|---|

Time ⟶

FIG. 6a

| Synchronization signal | ← Time domain gap → | Scheduling information for uplink transmission |
|---|---|---|

Time ⟶

FIG. 6b

Synchronization signal
Indication information
Downlink data
Uplink information

Uplink scheduling information

First downlink information

CRC

Time ⟶

FIG. 7a

Synchronization signal

Indication information

Downlink data

Uplink information

Uplink scheduling information

First downlink information

CRC

Time

FIG. 7b

Synchronization signal

Indication information

Downlink data

Uplink information

Uplink scheduling information

Downlink scheduling information

First downlink information

Downlink indication information

Uplink indication information

CRC

CRC

Time

FIG. 7c

Synchronization signal
Indication information
Downlink data
Uplink information

Uplink scheduling information
Downlink scheduling information

First downlink information

CRC

Time ⟶

FIG. 7d

Synchronization signal
Indication information
Downlink data
Uplink information

Uplink scheduling information
Downlink scheduling information

First downlink information

Downlink indication information

CRC

Uplink indication information

CRC

Time ⟶

FIG. 7e

Center frequency | Synchronization signal | Scheduling information for uplink transmission

Frequency

FIG. 8a

Center
frequency — | Synchronization signal | — | Scheduling information for uplink transmission | — — —

Frequency

FIG. 8b

Center
frequency - - - - | Synchronization signal | - - - - - - - - - - - - - - - - - - - - -

Frequency domain gap

Scheduling information for uplink transmission

Frequency

FIG. 8c

| Coverage level 0 | Synchronization signal Signal sequence: [W] | Scheduling information for uplink transmission Code rate=1 and quantity of repetitions=8 | Uplink information |
|---|---|---|---|
| Coverage level 1 | Synchronization signal Signal sequence: [W W'] | Scheduling information for uplink transmission Code rate=1 and quantity of repetitions=8 | Uplink information |
| Coverage level 2 | Synchronization signal Signal sequence: [W' W W' W] | Scheduling information for uplink transmission Code rate=1 and quantity of repetitions=8 | Uplink information |

FIG. 9

Bit 0

$S_2(t)$

Amplitude

1

0

T

Time(t)

−1

$S_3(t)=−S_2(t)$

Bit 1

$S_1(t)$

Amplitude

1

0

T Time(t)

$S_4(t)=−S_1(t)$

FIG. 10a

FIG. 10b

Bit 0

$S_1(t)$

Amplitude

1

0

T Time(t)

$S_4(t)=−S_1(t)$

Bit 1

$S_2(t)$

Amplitude

1

0

T

Time(t)

−1

$S_3(t)=−S_2(t)$

FIG. 10c

FIG. 10d

FIG. 11

FIG. 12

## INTERNATIONAL SEARCH REPORT

| International application No. |
| --- |
| **PCT/CN2023/101965** |

| A. | CLASSIFICATION OF SUBJECT MATTER |
| --- | --- |
| | H04W72/12(2023.01)i |

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT; ENTXT; VEN; 3GPP; CNKI: 指示, 下行, 上行, 资源, 调度, 时域, 同步信号, indicat+, downlink, uplink, resource, schedule, time frequency, synchron+ signal

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111585730 A (HUAWEI TECHNOLOGIES CO., LTD.) 25 August 2020 (2020-08-25) description, paragraphs 0138-0208 and 0294-0304 | 1, 12, 23-27 |
| A | CN 111886820 A (GUANGDONG OPPO MOBILE TELECOMMUNICATIONS CORP., LTD.) 03 November 2020 (2020-11-03) entire document | 1-27 |
| A | CN 112655262 A (GUANGDONG OPPO MOBILE TELECOMMUNICATIONS CORP., LTD.) 13 April 2021 (2021-04-13) entire document | 1-27 |
| A | WO 2021062811 A1 (GUANGDONG OPPO MOBILE TELECOMMUNICATIONS CORP., LTD.) 08 April 2021 (2021-04-08) entire document | 1-27 |
| A | WO 2020238992 A1 (HUAWEI TECHNOLOGIES CO., LTD.) 03 December 2020 (2020-12-03) entire document | 1-27 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 July 2023** | **23 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101965**

| Patent document cited in search report | | | Publication date (day/month/year) | Patent family member(s) | | | Publication date (day/month/year) |
|---|---|---|---|---|---|---|---|
| CN | 111585730 | A | 25 August 2020 | None | | | |
| CN | 111886820 | A | 03 November 2020 | WO | 2019238118 | A1 | 19 December 2019 |
| CN | 112655262 | A | 13 April 2021 | None | | | |
| WO | 2021062811 | A1 | 08 April 2021 | None | | | |
| WO | 2020238992 | A1 | 03 December 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210827907X